# EUROPEAN PATENT SPECIFICATION

(11) **EP 1 381 202 B1**
(45) Date of publication and mention of the grant of the patent: **22.03.2006**
(21) Application number: 03015774.7
(22) Date of filing: 10.07.2003
(51) Int. Cl.: H04L 29/06, H04L 12/56, H04L 12/28

(54) **Apparatuses and computer software for providing seamless IP mobility across security boundaries**
Vorrichtungen und Computersoftware zur Bereitstellung nahtloser IP-Mobilität über Sicherheitsgrenzen hinweg
Dispositifs et logiciel pour fournir une mobilité IP continue à travers des frontières de sécurité

(30) Priority: 11.07.2002 NO 20023336; 11.07.2002 US 394876 P
(43) Date of publication of application: 14.01.2004
(73) Proprietor: Birdstep Technology ASA, 0161 Oslo (NO)
(72) Inventor: Beckmann Nilsen, Frode, 0875 Oslo (NO); Klovning, Espen, 2010 Strommen (NO); Bryhni, Haakon, 0360 Oslo (NO)
(74) Representative: Onn, Thorsten

(56) References cited:
- WO-A-02/42861
- US-A1- 2002 069 278
- 3GPP2: "P.S0001-A Version 3.0: Wireless IP Network Standard" 3RD GENERATION PARTNERSHIP PROJECT 2 3GPP2, XX, XX, 16 July 2001 (2001-07-16), pages 1-61, XP002258147
- S.TESSIER; T-SYSTEMS: "draft-tessier-mobileip-ipsec-00.txt: Guidelines for Mobile IP and IPSec VPN Usage" IETF INTERNET STANDARDWORKINGDRAFT, June 2002 (2002-06), pages 1-5, XP015005479
- FARID ADRANGI; PRAKASH IYER; INTEL CORP.: "draft-adrangi-mobileip-natvpn-traversal-0 1.txt: Mobile IPv4 Traversal Across VPN or NAT and VPN Gateways" IETF INTERNET STANDARDWORKINGDRAFT, 23 February 2002 (2002-02-23), pages 1-24, XP015000030
- SHNEYDERMAN ET AL: "Mobile VPNs for next generation GPRS and UMTS networks" WHITE PAPER LUCENT TECHNOLOGIES, XX, XX, 2000, pages 1-15, XP002963845

## Description

The present invention relates to the field of IP mobility across a security boundary between domains. In particular, the present invention relates to a novel architecture of known network infrastructure components along with enabling client software on a user device.

### Background and terminology

The large family of IP protocols constitutes the foundation for the development of the Internet. Today the Internet is based on version 4 of the protocol family (IPv4. In the future it expected to gradually be replaced by version 6 of the protocol family (IPv6.

IP mobility is an enhancement that has gain interest in recent years. Different IP mobility protocol proposals exist both for IPv4 and IPv6. Making the Internet mobile has obvious advantages compared to the legacy mobile networks that are tailored for voice communication only. Seamless IP mobility refers to the case when the user application is transparent to network changes. This is in contrast to ordinary IP when the application session breaks if the user changes his point of attachment to the network. The predominant IP mobility technology today is Mobile IP [6, 13] that exists both for version 4 and version 6.

The key parts of a Mobile IP system are Mobile IP client software on the user terminal and a Mobile IP Home Agent (HA) in the network infrastructure. The terminal with the client software is commonly referred to as a Mobile Node (MN). The home agent controls the topological correct address of the mobile node (called home address) and maintains a binding list with the current location of a mobile node (called care-of-address). The mobile node signals to the home agent its current care-of-address. This happens either directly, or optionally via an intermediate Foreign Agent (FA) if one exists in the local environment. The home agent sets up a forward tunnel to redirect traffic from the topologically correct home address to the current care-of-address. The tunnel arises from packet encapsulation performed by the home agent. For reference, any non-mobile host is referred to as a Correspondent Node (CN).

Seamless IP mobility finds its most important application together with remote access IP security solutions like IPSec VPN [7]. A remote access VPN solution consists of a VPN client on the user terminal and a VPN gateway (VPNGW) in the infrastructure.

Together the VPN client and gateway employ both tunneling and encryption to maintain communication from a secure domain to a terminal that is remotely connected from an insecure location in a different domain. The VPN solution is usually the only way to reach components inside the secure domain.

State-of-art today is to leverage on the version 4 protocol family used on the Internet and to combine Mobile IP with IPSec VPN, thus facilitating the first generation architecture for seamless and secure IP mobility. The most prominent application is the enterprise environment in which the intranet represents the secure domain and the Internet represents the insecure domain. The potential of this combination is great since it gives nomadic workers less hassle and increased productivity as they are on the road. The most challenging part of the combined architecture is to maintain seamless operation also across the security boundary between the enterprise and the outside world. Any application started by a user while on the intranet should survive as the users moves outside. At the same time, the VPN solution must be employed while outside. Inside the secure domain the VPN solution should be turned off.

U.S. patent application publication no. US2002/0194385 discloses a "single mobility" Mobile IP client arrangement implementation providing a method for mobile IP nodes, wherein an IP application of the mobile node accesses the heterogeneous network via a virtual IP network interface generated in the mobile node, thus allowing switching between different network access interfaces while an IP application via a single mobile IP node, e.g. a home agent, is running. However, the disclosure is not concerned with the problem of providing seamless mobility for a mobile node on the move between different networks, and indeed not with the problems experienced when boundaries between such networks represent obstacles for transfer of mobility information.

U.S. patent application publication no. US20021069278 discloses a network-based mobile workgroup system has considerably wider appeal and application than normal virtual private networks in that it provides seamless mobility across a number of access technologies at the same time as it offers a granular security separation down to workgroup level. The mobile workgroup system is an access management system for mobile users with VPN and firewall functionality inbuilt. The mobile user can access the mobile workgroup system over a set of access technologies and select server resources and correspondent nodes to access pending their workgroup membership approvals. All workgroup policy rules are defined in a mobile service manager and pushed down to one or more mobile service routers for policy enforcement. The mobile service router closest to the mobile client, and being part of the mobile virtual private network, performs regular authentication checks of the mobile client during service execution. At the same time it performs traffic filtering based on the mobile user's workgroup memberships.

The standard "P.S0001-A Version 3.0: Wireless IP Network Standard" (XP002258147) defines requirements for support of wireless packet data networking capability on a third generation wireless system based on cdma2000. It is based on TSB XXX; , Wireless IP Network Architecture based on IETF protocols, and defines the two methods for accessing Public networks (Internet) and Private networks (Intranets): Simple IP and Mobile IP, and the required Quality of Service and Accounting support. IETF protocols are widely employed whenever possible to minimize the number of new protocols required and to maximize the utilization of well accepted standards and hence the speed to market. References to the required IETF protocols are provided in Section 3 of this standard.

The "Internet Draft" document "<draft-adrangi-nobileip-natvpn-tarversal-01>" by Farid Adrangi and Prakash Iyer, addresses the problem of providing seamless IP mobility with traversal across VPN or NAT and VPN gateways by introducing a "mobile IP proxy". The "MIP proxy"is connected to and operates in a dependency relationship with home agent located behind the firewall in the enterprise network, and represents thereby another customised solution all the way from the mobile terminal through to the home agent. Accordingly, the "mobile proxy" disclosure does not represent a solution to the problem of providing full seamless mobility to the mobile user wishing to make use of services provided in the enterprise network as well as services provided by a network external to the enterprise network. By the "MIP proxy" solution, a separate mobility arrangement must be established in order to provide mobile access also to services provided by the network situated outside the enterprise network.

### Brief description of the invention

It is an object of the present invention to provide a novel architecture together with corresponding client software that can be used to solve the problem of seamless IP mobility across security boundaries. A further object of the invention is to propose a method which is more general and has better characteristics than currently known alternatives.

The present invention provides an arrangement for use in a mobil data communications terminal (103), for providing mobil IP communication via a dual tunnel IP packet data connection between a first application (121) residing in the mobil data communications terminal and a second application (101) residing in a second terminal, said second terminal being in communication with an inner network (105), said inner network being connected with an outer network (107), the features of which arrangement are recited in the accompanying independent patent claim 1.

Further advantageous features of the arrangement for use in a mobil data communications terminal (103) of the present invention are recited in the accompanying dependent patent claims 2 through 7.

The present invention provides a computer readable data carrier storing a set of computer program code, which, when being executed in a mobile IP communication terminal, cause the mobile IP data communication terminal to perform the following method steps recited in the accompanying independent patent claim 8.

Further advantageous features of the computer readable data carrier of the present invention are recited in the accompanying dependent patent claim 9.

The present invention provides a communication system arranged for providing to a mobil data-communications terminal (103) a mobil IP packet data communication via a dual tunnel (124"thin", 124"thick") IP packet data connection between a first application (121), said first application being operable in said mobil data communications terminal (103), and a second application (101), said second application being operable in a second terminal in an inner network (105), the features of which system are recited in the accompanying independent patent claim 10.

In this document the term architecture is used to denote a combined structure that comprises both a Mobile IP part and a VPN part. The Mobile IP part in itself is referred to as a system. The VPN part is in contrast refer to as a solution. This is for clarity only. These terms could have been used interchangeably.

A VPN solution and a Mobile IP system both require client software on the mobile node. The term client software is generally used if the specific meaning is clear from the context. Otherwise the qualifiers "mobility" and "security" are added to distinguish the client software parts.

In a first aspect, the present invention provides an arrangement in a mobil data communications terminal (103) for providing mobil IP communication via a dual tunnel IP packet data connection between a first application (121) in the mobil data communications terminal and a second application (101) in a second terminal in communication with an inner network (105), said inner network directly or via a firewall (104) connected with an outer network (107), wherein an outer mobil IP home agent (102) is arranged in the outer network or in a DMZ (106) associated with the firewall and an inner mobil IP home agent (130) is arranged in the inner network, said arrangement comprising:
a first mobil IP client part (116) configurable for association with the inner mobil IP home agent (130), said first mobil IP client part arranged to convey data between the first application and the second mobil IP client part and to an inner tunnel part (123) directed to the inner home agent, and
a second mobil IP client part (115) configurable for association with the outer mobil IP home agent (102), said second mobil IP client part arranged to convey data between the first mobil IP client part and the outer network and to an outer tunnel part (124) directed to the outer home agent.

In a second aspect, the present invention provides an arrangement, wherein said second mobil IP client part further is configurable to also convey data between the first application and the outer network, and said arrangement further comprising a device which, if the terminal obtains access via the outer network, is arranged to provide a first connection between the first application and the first mobil IP client part, a second connection between the first mobil IP client part and the second mobil IP client part, and a third connection between the second mobil IP client part and the outer mobile IP home agent, and
if the terminal obtains access via the inner network, is arranged to provide a fourth connection between the first application and the second mobil IP client part, and a fifth connection between the second mobil IP client part and the inner mobile IP home agent.

In a third aspect, the present invention provides an arrangement, wherein said first mobil IP client part (116) is controllable for activation or deactivation, and said arrangement further comprising a mobil IP detection device:
a. said mobil IP detection device adapted to activate the first mobil IP client part on detection of a connection to the inner network (105) and a successful mobil IP registration with the inner home agent (130), and
b. said mobil IP detection device adapted to activate the second mobil IP client part on detection of a connection to the outer network (107) and a successful mobil IP registration with the outer home agent (130).

In a fourth aspect, the present invention provides an arrangement, wherein said first mobil IP client part (116) is controllable for activation and deactivation, and that the arrangement further comprises a mobil IP detection device arranged to activate the first mobil IP client part on detection of connection to the outer network (107) by means of at least one of a detection device selected from a group comprising:
a. a first monitoring device arranged to determine the source IP address of an incoming packet and to determine that the address is outside an address range configured for the inner network (105),
b. a second monitoring device arranged to analyze ICMP control messages and arranged to determine that an address associated with the ICMP control message is outside an address range configured for the inner network (105),
c. a third monitoring device arranged to detect an outer home agent (102) on transmission of a registration message with improper security association, and
d. a fourth monitoring device arranged to compare results from said first and second monitoring devices with collected history regarding MAC and IP addresses to Mobil IP Foreign Agents, Default gateways, and WLAN access points that indicate that the mobil terminal is operating in the outer network, and
wherein at least one of said detection devices (a,b,c,d) is arranged to indicate that the mobil terminal (103) is connected to the outer network.

In a fifth aspect, the present invention provides an arrangement, wherein said first mobil IP client part (116) is controllable for deactivation, and said arrangement further comprising a mobil IP detection device arranged for deactivating the first mobil IP client part on detection of a connection to the outer network (107) by means of at least one of a detection device selected from:
a. a first monitoring device arranged to determine the source IP address of an incoming packet and arranged for detecting that the address is inside an address range figured for the inner network (105),
b. a second monitoring device arranged to analyze ICMP control messages and arranged to detect that an address associated with the ICMP control message is inside an address range configured for the inner network (105),
c. a third monitoring device arranged to detect an inner home agent (130) on transmission of a registration message with incorrect security association, and
d. a fourth monitoring device arranged to detect inconsistances in results from the first, the second and the third monitoring devices and collected history regarding MAC and IP addresses to Mobil IP Foreign Agents, Default Gateways, and WLAN access points that indicate that the mobil terminal is operating in the inner network (105), and
wherein at least one of said detection devices (a,b,c,d) is arranged to indicate that the mobil terminal (103) is connected to the inner network.

In a-sixth aspect, the present invention provides an arrangement, wherein said arrangement further comprises,
a third security client part interposed between the first and second mobil IP client parts and configurable for via a security arrangement arranged between said inner and outer networks establishing a secure connection with the inner network.

Furthermore, the present invention provides a mobil IP terminal, wherein said mobil IP terminal comprises an arrangement according to any one of the aforementioned aspects of the invention.

Furthermore, the present invention provides a computer program product comprising a data carrier having thereon a computer program code loadable and executable in a mobil IP data communications terminal, wherein said computer program code when loaded and executed in the mobil IP data communications terminal effects the establishment of an arrangement as recited in any one of the aforementioned aspects.

Furthermore, the present invention provides an information technology (IT) system for providing a packet data connection between a first application (121) operable in a mobil data communications terminal (103) and a second application (101) operable in a second terminal in an inner network (105) protected by a firewall (104), said system arranged for communication by means of mobil IP with a system comprising the inner network, an outer network (107) and an outer home agent (102) arranged in the outer network or in a DMZ (106) associated with the firewall arranged between the inner and outer network, wherein:
an inner home agent (130) is arranged in the inner network, and
said inner home agent is configurable for association with a first mobil IP client part (116) operable in the mobil data communications terminal, and said outer home agent is configurable for association with a second mobil IP client part (115) operable in the mobil data communications terminal,
said first mobil IP client part being arranged to convey data between said first application and said other mobil IP client part and to an inner tunnel part (123) directed to the inner home agent, and
said second mobil IP client part being arranged to convey data between said first mobil IP client part and said outer network and to an outer tunnel part (124) directed to said outer home agent.

Furthermore, the present invention provides a data communications system for providing a packet data connection between a first application operable in a mobil data communications terminal (103) and a second application (101) operable in a second terminal connected to an inner network (105) protected by a firewall (104), said system arranged for communication by means of mobil IP via a system comprising the inner network, an outer network (107) and an outer home agent (102) arranged in said outer network or in a DMZ (106) associated with the firewall (104) being arranged between the inner and outer networks, wherein:
an inner home agent (130) is arranged in the inner network, and
said mobil data communications terminal including:
   a. a first mobil IP client part (116) configurable for association with said inner mobil IP home agent (130), said first mobil IP client part arranged to convey data between said first application and said second mobil IP client part and to an inner tunnel part (123) directed to said inner home agent, and
   b. a second mobil, IP client part (115) configurable for association with said outer mobil IP home agent (102), said second mobil IP client part being arranged to convey data between said first mobil IP client part and said outer network and to an outer tunnel part (124) directed to said outer home agent.

Detailed description and embodiments of the invention.

State-of-art architectures and their associated features will now be explained in conjunction with accompanying figures depicting prior art, wherein:
fig. 1 is a schematic representation example of a prior art Mobile IP system,
fig. 2 is a schematic representation another example of a prior art Mobile IP system,
fig.3 is a schematic representation another example of a prior art Mobile IP system,
fig. 4 is a schematic representation another example of a prior art Mobile IP system,
fig. 5 is a schematic layer model representation of an example of a prior art client and network adapter arrangement in a Mobile IP data terminal, and
fig. 6 is a schematic layer model representation of another example of a prior art client and network adapter arrangement in a Mobile IP data terminal.

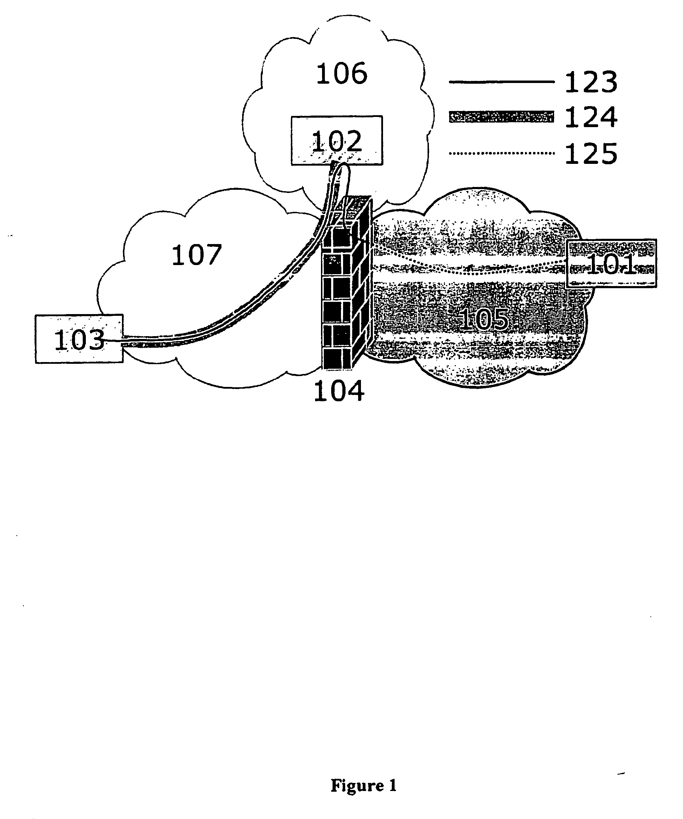

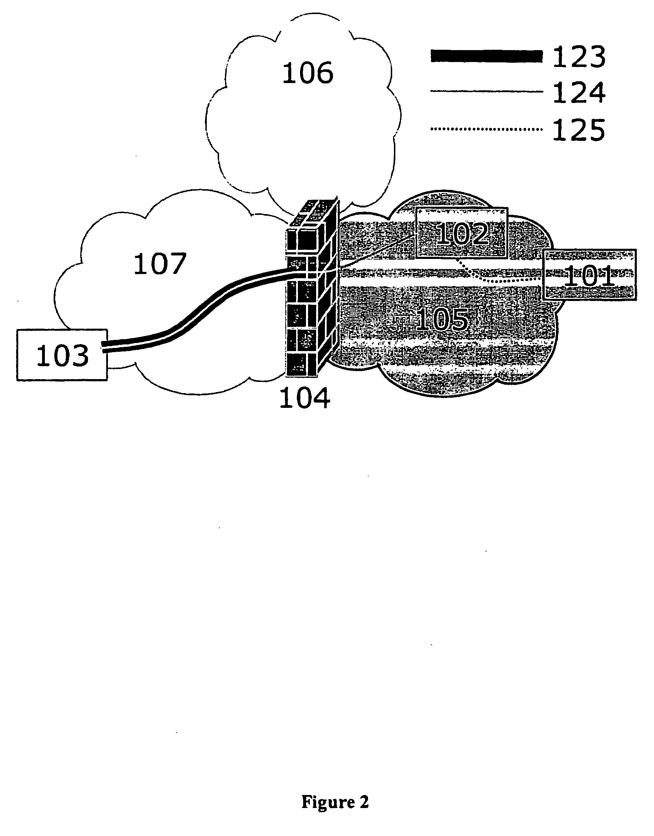

As suggested by figure 1 and figure 2 there are basically two opposite ways of deploying a Mobile IP system together with a VPN solution to realize a combined architecture. Both architectures are well known to the standardization bodies [1] as well as in the industry in general [3,4,5]. The starting point is in either case a secure domain 105 separated from an insecure domain 107 by a security gateway 104. The gateway defines the boundary between the domains and the inside corresponds to the secure side. For simplicity the reader may think of an enterprise network (secure inside domain) connected to the Internet (insecure outside domain). The secure domain comprises one or more IP networks under the same administrative control. The secure domain is also referred to as the home domain of associated users. The insecure domain comprises IP networks that are controlled by different administrative entities. The security gateway (aka: firewall) is responsible for packet filtering as well as remote access to the secure domain from outside. Gray shading is used throughout this document to signify a secure domain with its constituent components.

In figure 1 the Mobile IP home agent 102 is located outside the secure domain, e.g. in the de-militarized zone 106 of an enterprise environment. The Mobile IP system does in this case operate outside to the secure domain and its role is to mobilize the VPN solution. The system offers a fixed address for the VPN tunnel end-point, thus the VPN tunnel survives any network change made by the mobile node 103. The encrypted VPN packets are carried as payload in the Mobile IP system and the VPN solution is referred to as overlaid. This is illustrated in figure 1 by the VPN tunnel 123 being embraced by the Mobile IP tunnel 124. The native traffic 125 destined for the corresponding node 101 on the inside becomes apparent in the secure domain after decapsulation from the VPN tunnel. The Mobile IP components 102 and 103 are in this case drawn in a hatched gray/white pattern to signify that these components are associated with the secure domain (gray) but are otherwise operating in an insecure environment (white).

In figure 2 the home agent 102 is located inside the secure domain 105. The Mobile IP system does in this case operate on the inside and can only be reached from outside over the VPN solution, thus the home agent is drawn in a solid gray colour. The VPN tunnel 123 does now embrace the Mobile IP tunnel 124, corresponding to the opposite sequence of figure 1.

The architecture shown in figure 2 suffers from the fact that the remote VPN tunnel end-point at the mobile node 103 will change at every network change. Accordingly, the VPN tunnel 123 needs to be re-established at every handover. This will in turn require re-establishment also of the Mobile IP tunnel. On the other hand, there are some disadvantages also with the architecture shown in figure 1. First, since the home agent 102 is deployed on the outside the home address of the mobile does not belong to the secure domain 105. Consequently, the user must use his VPN solution from all locations, also when he is inside his otherwise secure home domain. For the same reason, when the mobile node is inside the secure domain traffic to any other corresponding node 101 on the inside will loop via the outside home agent 102. Both effects are unfortunate since they impose a performance penalty. Finally, there is a potential security risk since the home agent 102 needs to set up dynamic forwarding tunnels through the firewall 104 to arbitrary mobile nodes inside the secure domain. Normally, a tunnel through a firewall is allowed only if both end-points are static and if the traffic through the tunnel is subject to encryption both ways.

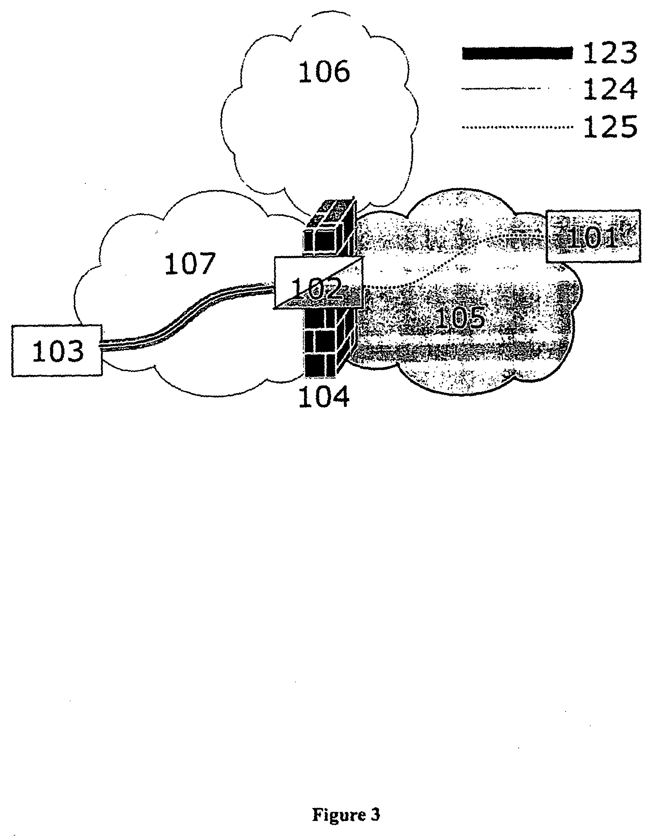

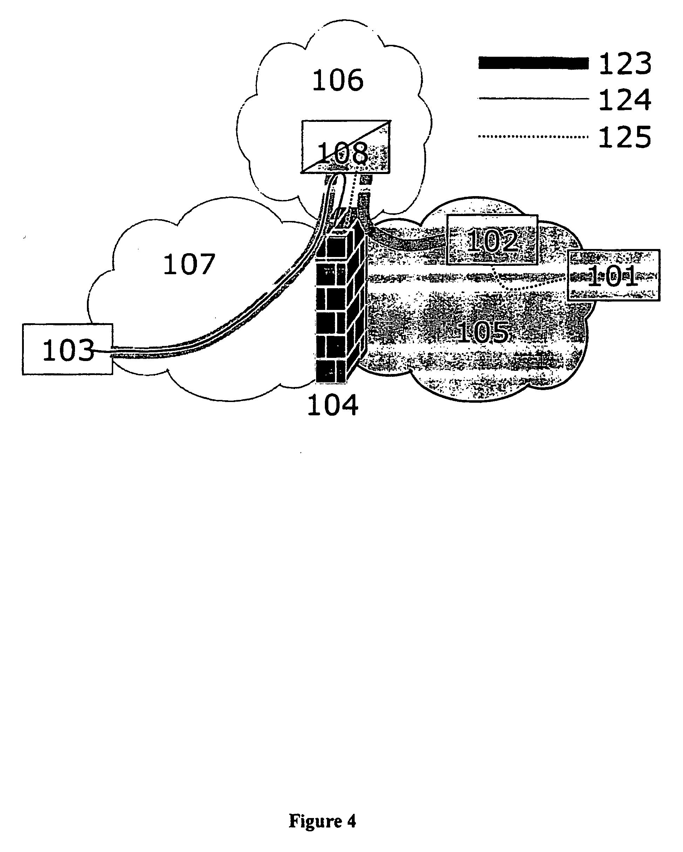

To overcome the disadvantages just mentioned it is possible to make hybrid architectures that combine the characteristics from figure 1 and 2. Figure 3 and figure 4 illustrates two different approaches. The architecture shown in figure 3 is at the core of some vendor-specific offerings available in the industry [4,5]. At the time of this writing the architecture shown in figure 4 is proposed for standardization to facilitate multi-vendor implementations [2]. Realizations of the architecture in figure 4 are currently not available from any vendor but are expected to become available in the near future.

In figure 3 the home agent 102 and the VPN gateway 104 are implemented in a single-box. The home agent is in this case drawn partly in solid gray and partly in a hatched pattern to indicate that it belongs to the secure domain yet at the same time it is accessible from outside without using the VPN solution. The operating model is essentially the same as in figure 2 but the architecture in figure 3 does not suffer from the same disadvantages. On the other hand, the single-box solution 102 gives restricted flexibility and scalability since the home agent component and the VPN components are always co-located. The fact that both components must be provided by the same vendor may also be a disadvantage. Many enterprises have already made existing investments in either Mobile IP or VPN components. An integrated single-box solution prevents these companies from leveraging their previous investments.

The architecture shown in figure 4 is based on the same principles as in figure, 3 but it is implemented as a multi-box solution. The single-box solution is here replaced by three components; the inside home agent 102, the VPN gateway 104 and a proxy agent 108. The proxy agent is located in a de-militarized zone 106 outside the secure domain and it is basically the equivalent of a home agent and a mobile node implemented in the same box. Its role is to be an intermediate relay for signalling and packet forwarding between the real mobile node 103 and the inside home agent 102. The rationale of the proxy agent is to handle signalling and packet forwarding in a secure way by working in harmony with the VPN gateway and the internal home agent. The proxy agent must be located in a DMZ since embracing firewall policies must protect it. The proxy agent 108 is drawn partly in solid gray and partly in a hatched pattern to indicate that the inside home agent 102 trust it yet at the same time the proxy agent is accessible from outside without using the VPN solution.

Even if the architecture shown in figure 4 is an improvement over the one shown in figure 3, giving increased flexibility and also accommodating a multi-vendor environment, the architecture of figure 4 also has some unfortunate characteristics.

First, the proxy agent 108 requires specific protocol considerations as well as network design considerations. This is much due to the fact that both the VPN gateway 104 and the proxy agent 108 are involved in routing the same set of mobile node addresses, with the risk of conflicts or design flaws. These boxes must also be located on the same subnet, thus reducing deployment flexibility. The fundamental idea is to ensure that both signalling and data packets between the mobile node 103 and the actual home agent 102 will always traverse the proxy agent 108. In the end, the proxy agent is a vulnerable component since the security of the architecture in figure 4 depends totally on a correct setup. On one hand, the proxy agent, the VPN gateway and the home agent must all work in harmony. On the other hand, the proxy agent must be protected by the firewall. In this complex environment any mis-configuration represent a security risk.

Secondly, the proxy agent is a novel component that must be developed by the industry before the architecture shown in figure 4 is ready for deployment. Moreover, extra capabilities are required both from the VPN gateway, the home agent and the mobile node that are either beyond the base protocols standard or beyond what is currently the state-of-art in the industry. Accommodating these changes will take time too. In sum, the architecture of figure 4 demands an effort from the whole industry before it is ready for deployment.

Finally, according to Amdahl's law [11] the performance of the proxy agent 108 and the VPN gateway 104 is linked. Increasing the performance of the total system requires as carefully balanced upgrade of the performance of its constituent's components. The inner home agent 102 and the proxy agent 108 are also linked since the proxy is designed to be the primary handling agent. A mobile node on the inside will attempt a registration with the proxy agent first, and only subsequently register with the inner home agent 102 if the proxy tells the mobile node to do so. This makes the proxy agent a critical component reducing the overall reliability of the total system. If the proxy agent becomes unavailable the whole system breaks down.

### State-of-art client software

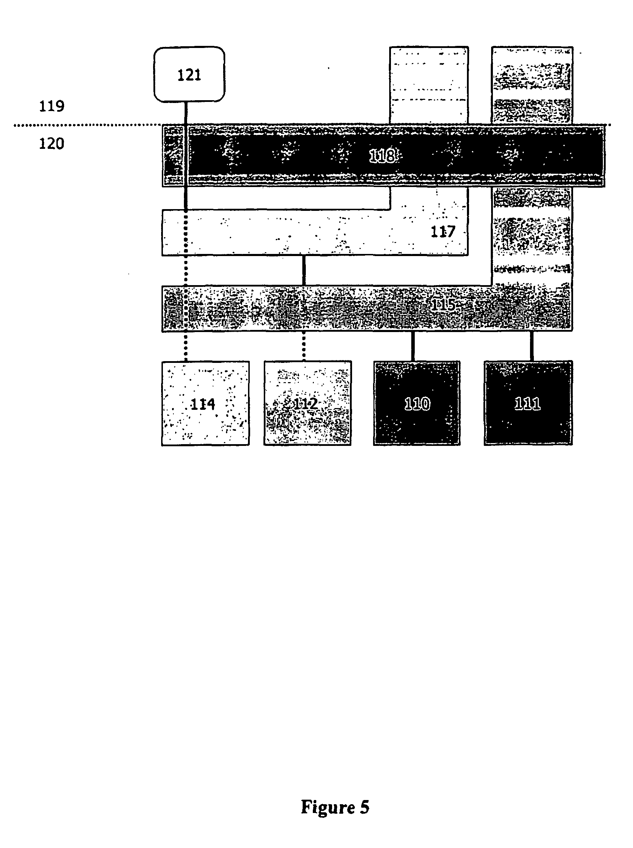

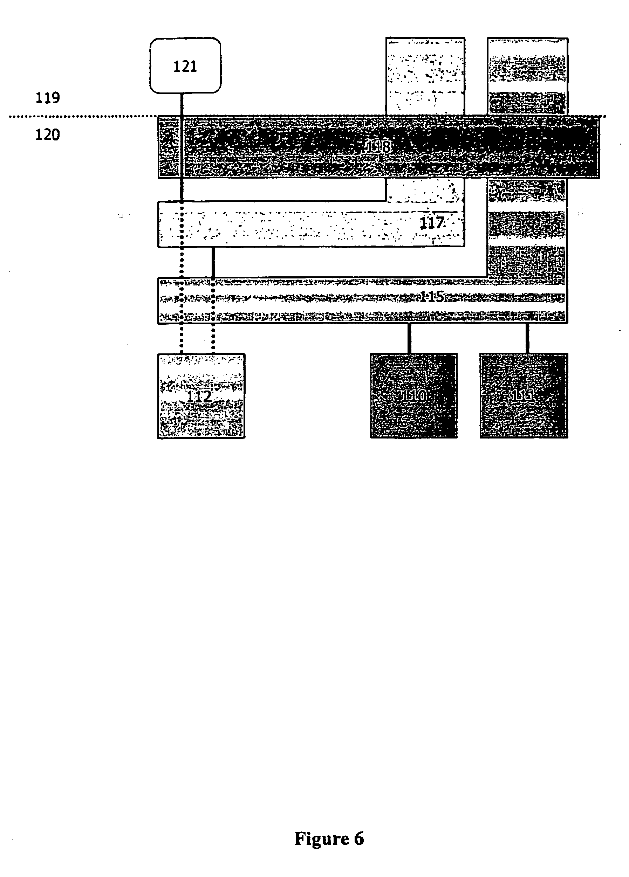

The current art of client software, including both the Mobile IP part and the VPN part, has impact on how a combined architecture can be realized. Taking a Mobile IP client vendor like Birdstep as the starting point, figure 5 and figure 6 show the prevailing implementation principles. These principles apply for today's state-of-art terminals like laptops and PDAs, running a state-of-art operating system like Microsoft Windows. These terminals and operating systems make a distinction between user space 119 and kernel space 120. User applications 121 run in user space. This is in contrast to key network components like a TCP/IP stack 118, drivers for LAN/WLAN adapters 110 or drivers for PPP dial-connection 111 that come as a native part of the operating system in kernel space. Note finally that the principles embodied in figure 5 and figure 6 assumes the overlaid VPN model from figure 2, 3 and 4. Hence, the VPN driver, 117 horizontal, level is above the Mobile IP driver level, 115 horizontal, in kernel space. The extensions of these software components into user space, 115 vertical, 117 vertical, represent the corresponding daemon parts.

The difference between figure 5 and 6 is how the VPN software is implemented. As suggested by figure 5, some vendors add a virtual VPN adapter 112 to the client software to host locally the address from the secure domain that is associated with the VPN connection. A virtual VPN adapter is just like any other adapter to the overlaying driver levels. However, since there is no physical connection on a virtual VPN adapter the VPN software 117 must take care of routing traffic to one of the physical adapters 110, 111. As suggested by figure 6 other VPN client implementations does not have a virtual VPN adapter. These solutions will rather maintain in the VPN gateway the association between a particular VPN connection and an address from the secure domain. The gateway will in this case also effectively perform a Network Address Translation (NAT) operation.

In either case; the Mobile IP client software 115 uses its own virtual mobility adapter 112 to maintain the invariable Mobile IP address. The user space part of the Mobile IP software, 115 vertical part, is a daemon that determines what physical adapter represents the currently optimal connection. The role of the Mobile IP driver part, 115 horizontal part, is to shift packet traffic accordingly between the virtual mobility adapter and the currently active physical adapter. The dashed vertical lines in figure 5 and figure 6 suggest how the different adapter instances are visible at all levels all the way up to the user application. The solid vertical line parts that connect the different levels in kernel space represent the packet shifting. Hence, these lines show how packets actually flow. Traffic to/from the user application are associated with the VPN adapter if one exists. Otherwise, the traffic is associated with the Mobility adapter. In the former case the VPN daemon will perform the required packet shifting between the VPN adapter and the Mobility adapter.

Client software for the architecture shown in figure 2, which is the opposite of the overlaid VPN architecture from figure 1, is realized along similar lines as those shown in figure 5 and figure 6. First, the drivers 115 and 117 must swap position in the stack. Second, packet shifting is less of an issue since the Mobile IP client will then always send its traffic over what is defined to be the default route by the VPN solution.

Please note that the hybrid architecture shown in figure 4 effectively assumes that the Mobile IP address and the inside VPN address associated with a mobile node 103 is the same address. For this reason, the hybrid architecture will only work if the VPN client does not have its own virtual adapter. A VPN client using a virtual VPN adapter will lead to an address conflict with the virtual mobility adapter used by Mobile IP client.

There are two classes among the state-of-art VPN solutions today regarding the interface seen by the user. Some vendors support a background-monitoring model in which the VPN client is resident and always ready for action. Any attempt to send traffic to what is defined to be the secure domain will automatically lead to encryption. Request for user authentication pops up automatically whenever needed. Other vendors depend on an explicit dial-type model in which the user himself must establish the VPN tunnel when communication with the secure domain is required. Some vendors support both operating models. Note also that most vendors support both full-tunnelling and split-tunnelling configurations in their VPN solutions. In the former case all traffic will be sent via the secure domain even if it destined for an outside location. With split-tunnelling traffic to outside locations can be sent directly from the mobile node when it is itself outside.

Note finally that a Mobile IP client can work with overlaid VPN solutions both in split-tunnelling and full-tunnelling mode. In the latter case the only traffic that is allowed to bypass the security solution is the Mobile IP signalling protocols.

### Rationale of invention

The architecture in figure 4 represents state-of-art for seamless IP mobility across a security boundary today. The fact that the Mobile IP system works across the security boundary in parallel with the VPN gateway is unfortunate, however. The proxy agent represents a vulnerable component that must be carefully designed and deployed in harmony with the VPN gateway, the inside home agent and the embracing firewall.

The invention described in this document has its origin as a better approach than the architecture shown in figure 4 to the same problem. The proposed method combines IP mobility and IP security technologies in novel way to solve the problem more generally. The key to the invention is to use independent IP mobility systems at each side of the security boundary rather than one system spanning the boundary. The two mobility systems are in turn cleanly separated by the intermediate IP security solution. The role of the inner mobility system (running inside the security domain of the user) is to make user applications transparent to network changes internally. The role of the outer mobility system is to make the remote access security solution transparent to network changes externally. Together the two mobility systems and the remote access security solution facilitate seamless IP mobility also across the security boundary.

As previously pointed out the architecture from figure 4 suffers from the fact that the VPN solution and the Mobile IP system are closely interlinked in various aspects. In the end, this is all due to the fact that both parts operate in the same address domain and that they are involved in routing of the same set of mobile node addresses. The novelty of the proposed method is to make a split at this point by using a different set of addresses for mobility handling on each side of the security boundary. Since each of the three constituent parts operates in separate address domains their components can be deployed at any location within each domain. This is in contrast to the architecture shown in figure 4.

The invention represents a best-of-breed approach including the equivalent of both architectures shown in figure 1 and figure 2 at the same time. The gain of making a clean separation of mobility and security is a method that is more versatile and applicable in a wider scope. The proposed method is client-centric rather than network-centric. A client-centric approach requires no changes in the existing infrastructure except the introduction of a new mobility system. Since this second system is standards based anyway, the client-centric approach is easier and faster to deploy than a more involved network-centric approach. The method has less side-effects and less stringent deployment requirements than the alternatives known today. The scalability is also better since there are no implicit dependencies. Each system is deployed individually and can scale (and perform) independently as required. The reliability of the combined architecture is also better than the architecture from figure 4 since there are no dependencies between the parts. In particular, the inner system is fully operational even if the outer system and the security gateway components are temporarily unavailable. Moreover, the inner system will still be accessible from outside even if the outer system is temporarily down.

The invention provides secure and seamless IP mobility in any domain with independent choice of IP mobility and security technologies. The method does not require any changes (adaptations nor extensions) to any IP mobility or security technology beyond existing or upcoming standards. Nor does it require any changes to existing network design and infrastructure components. The mobility client software is the only component that is affected, hence being the enabling component. The method applies both for the current IPv4 family of standards as well as the forthcoming IPv6 family of standards. The method applies in particular for the Mobile IP and IPSec VPN standards but is not restricted to these technologies. The method is applicable for any IP mobility and IP security protocols as long as they are based on the same few underlying principles.

In the following, the invention will be explained with reference to the accompanying drawings, wherein:

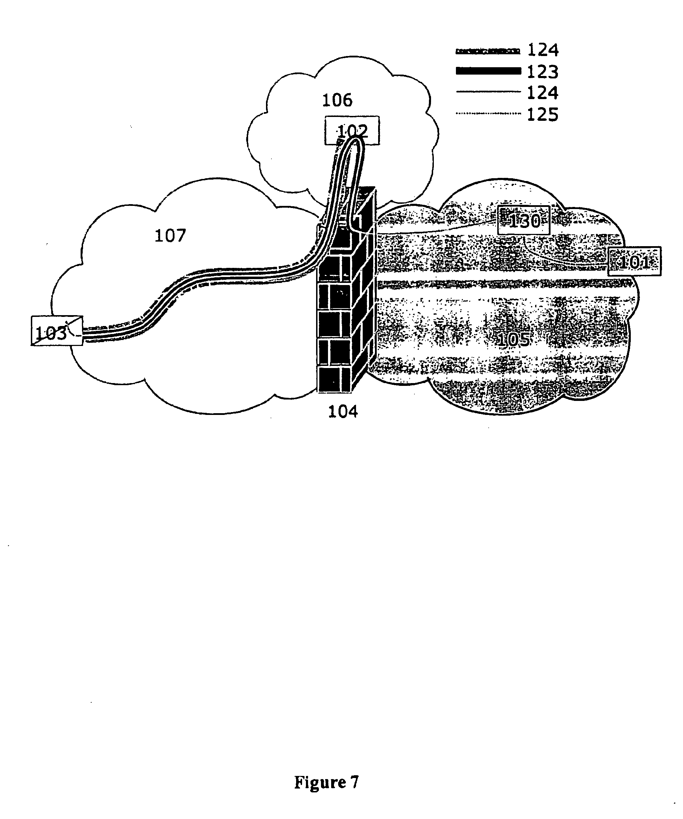

fig. 7 is a schematic representation of an example of a Mobile IP solution according to the present invention,

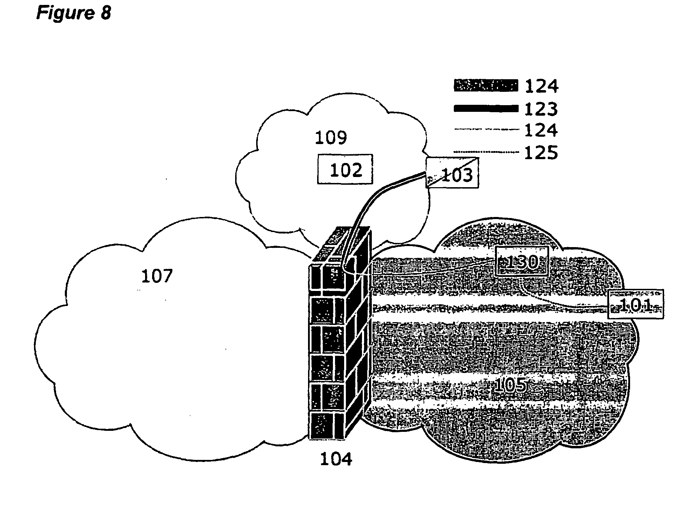

fig.8 is a schematic representation of another example of a Mobile IP solution according to the present invention,

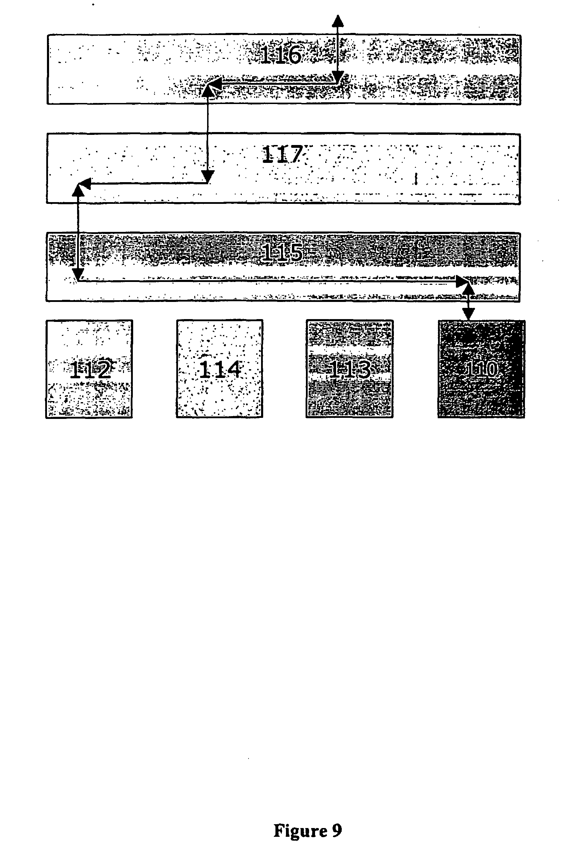

fig. 9 is a schematic layer model representation of an example of a client, and network adapter, arrangement according to the present invention in a Mobile IP data terminal,

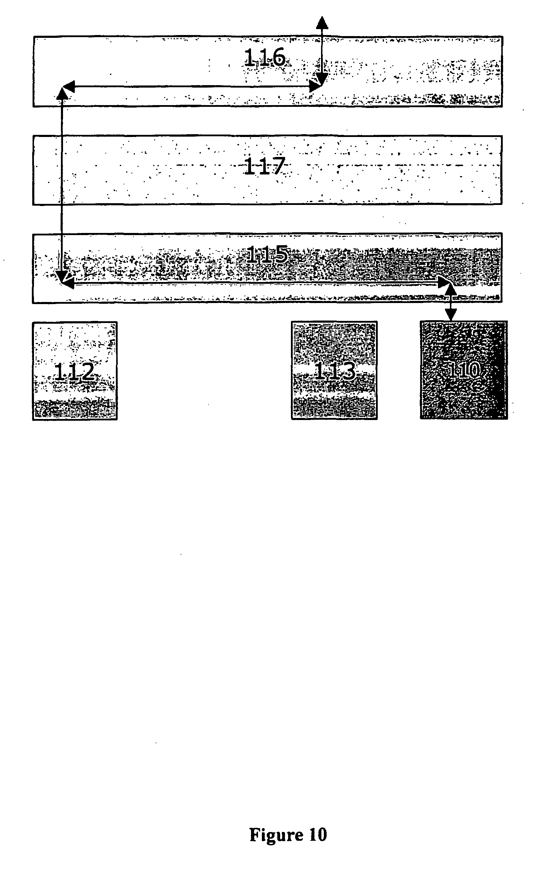

fig. 10 is a schematic layer model representation of another example of a client, and network adapter, arrangement according to the present invention in a Mobile IP data terminal,

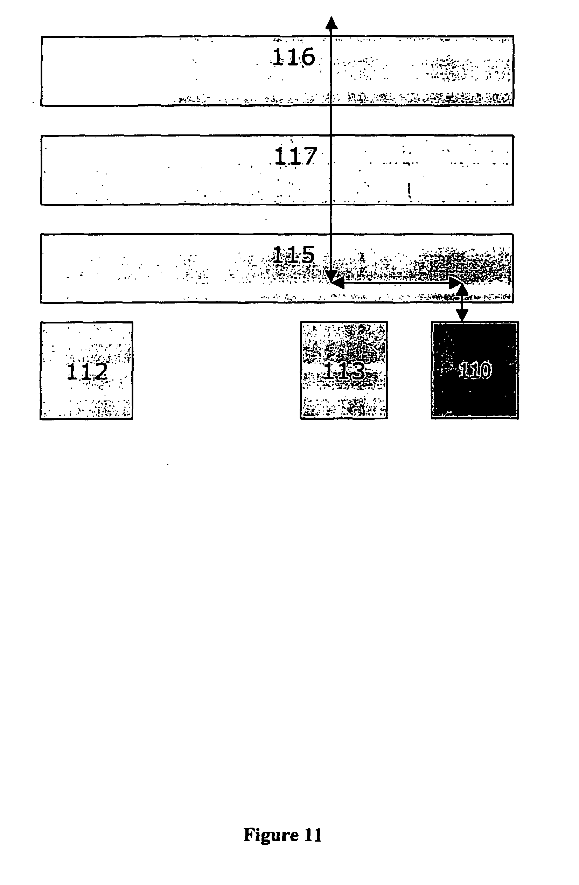

fig. 11 is a schematic layer model representation of yet another example of a client, and network adapter, arrangement according to the present invention in a Mobile IP data terminal,

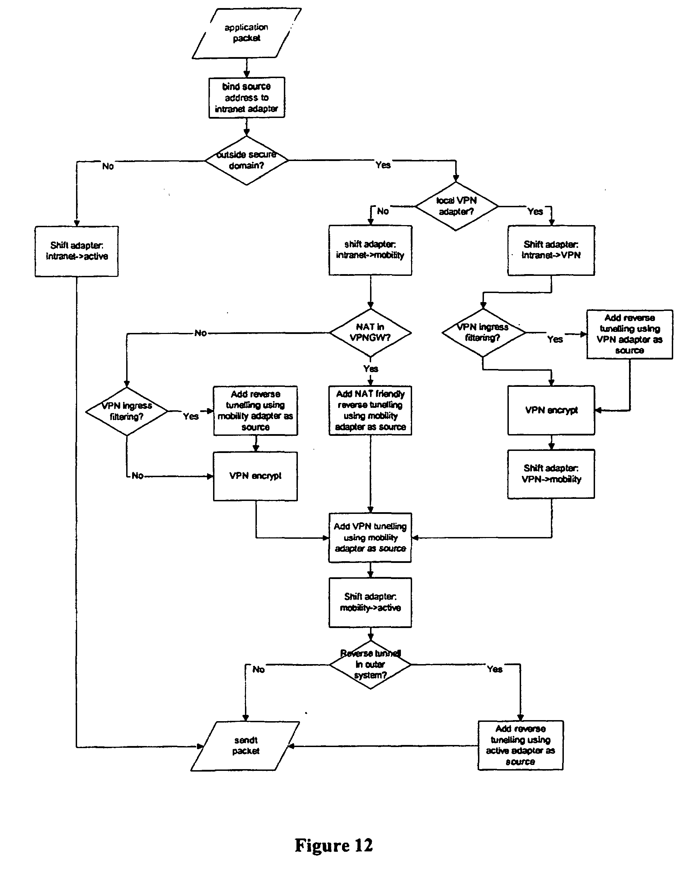

fig. 12 is a flow chart representation of the operation of an example of a client arrangement according to the present invention for a Mobile IP data terminal,

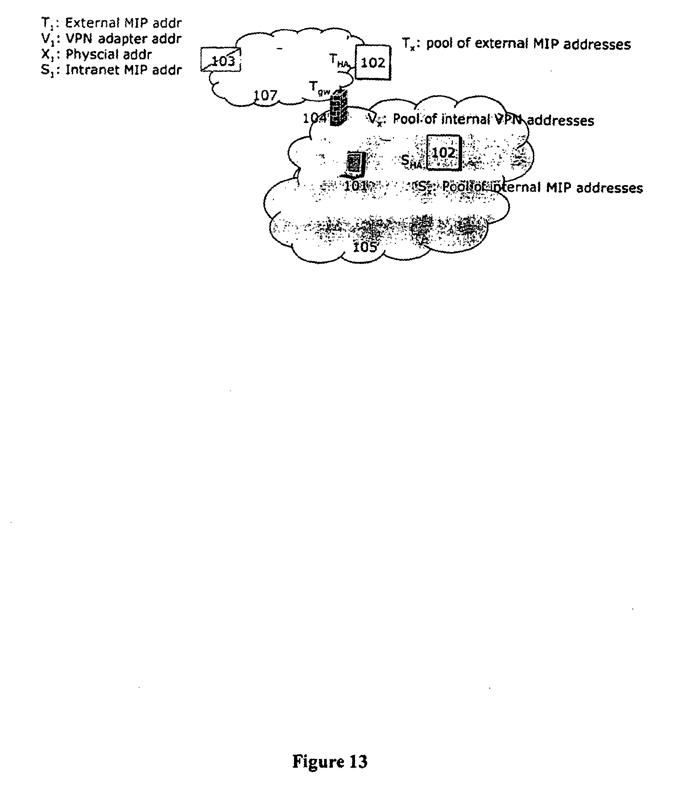

fig. 13 is a schematic representation of an example of address arrangements in a Mobile IP solution according to the present invention,

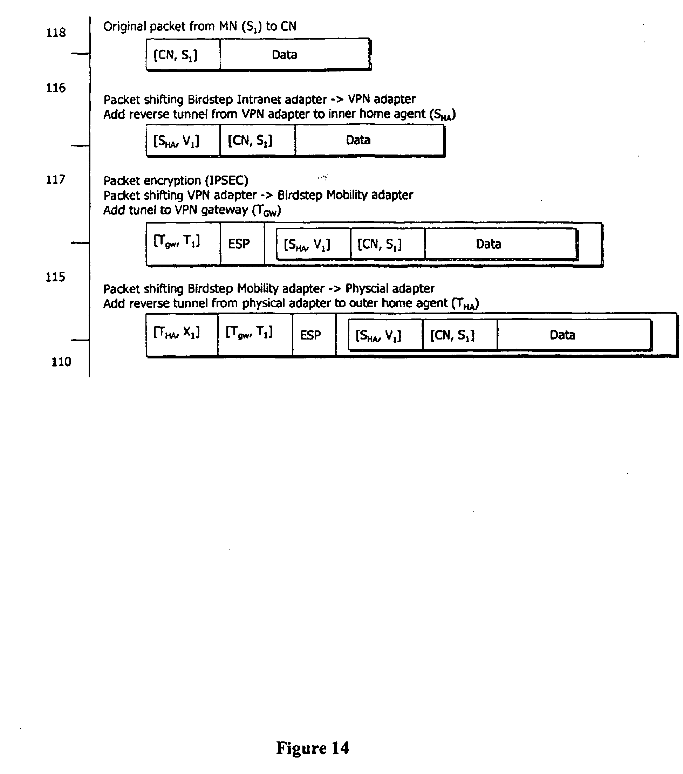

fig. 14 is a schematic representation of an example of a data packet encapsulation arrangement in Mobile IP solution according to the present invention,

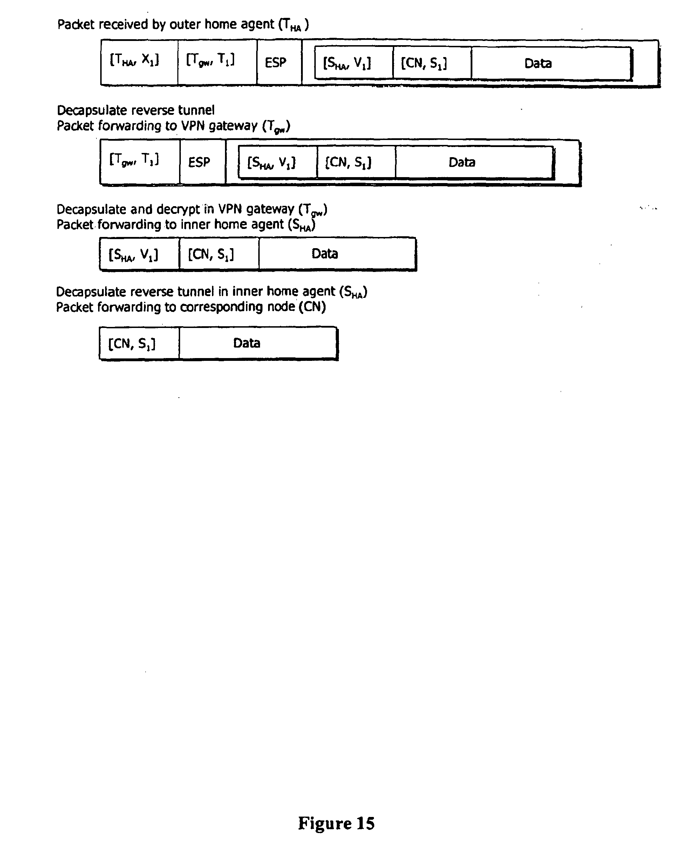

fig. 15 is a schematic representation of an example of a data packet decapsulation arrangement in Mobile IP solution according to the present invention, and

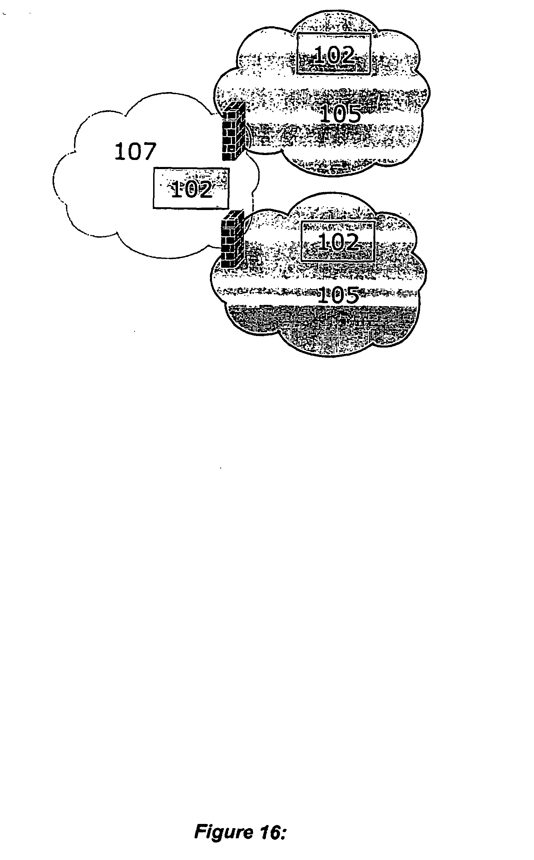

fig. 16 is a schematic illustration of an example of a deployment of multiple Mobile IP home agents along the edges of an outer network.

First to follow is a description of the method an arrangement of the invention.

The general method is best described when casted in a more specific setting. Hence, this section describes the invention assuming that Mobile IP is used for mobility handling and that an IPSec VPN solution is used for remote access to the secure domain. The generality and extendibility of the method is described in a subsequent section.

As suggested by figure 7, the method is based on the combined use of independent Mobile IP systems in the secure domain 105 and insecure domain 107, respectively. The gray shaded home agent, 130 gray, inside the secure domain represents the inner system. The hatched home agent, 102 hatched, outside the secure domain represents the outer system. The enabling component of the method is the Mobile IP client software running on the user device that can operate with both Mobile IP systems simultaneously. The dual capability is indicated by the partly solid gray and partly in a hatched pattern on the mobile node 103.

It is assumed that the user's ordinary VPN solution is in control of all access to the secure home domain. In particular, operation of the inner Mobile IP system takes place over the VPN solution; i.e. the mobile IP tunnel, 124 thin, for the inner system is embraced by the VPN tunnel 123. This corresponds to the architecture shown in figure 2. Operation of the outer Mobile IP system is in contrast according to the architecture shown in figure 1; i.e. the VPN tunnel 123 is embraced by the Mobile IP tunnel, 124 thick, of the outer system. Hence, the proposed method is a best-of-breed approach including both legacy architectures at the same time. This is reflected by the fact that there are three levels of tunnels involved when the mobile node connects from the outside. The native user traffic 125 is in the end carried by the Mobile IP tunnel 124 of the inner system.

The role of the inner Mobile IP system is to make user applications transparent to network and address changes inside the secure domain. Note that this includes the transition case when the mobile node moves from the inside to the outside. Then a VPN tunnel will be established that is basically a prolonged arm of the secure domain. A key feature of the method is to use the internal address that is associated with the VPN tunnel 123 as the care-of-address in the binding list of the inner home agent, 130 gray. This inner care-of-address will not change as long as the mobile node 103 connects from the outside via the VPN tunnel. At this point the outer Mobile IP system becomes important. The role of the outside system is to make the VPN tunnel itself transparent to network and address changes on the outside. In sum, the two Mobile IP systems take different roles but works naturally together isolated by the intermediate VPN solution.

The inner system, 130 gray, is always in use for a mobile node. The outer system, 102 hatched, is in use only when the mobile node is outside. In this case the operation of the inner system becomes trivial for the reason just explained. Moreover, the inner system will always operate in co-located mode when the mobile node 103 is on the outside. Otherwise, both Mobile IP systems can operate both in co-located mode and in foreign agent mode. Foreign agents that are deployed on the inside will be used by the inner system. Foreign agents that are deployed on the outside will be used by the outer system.

The issue of reverse tunneling for the two systems is discussed in a subsequent section on addressing details.

There are no specific requirements on the address range that is used for mobile nodes in the inner system. Any address range can also be use for the outside system. The use of mobile node addresses in the outer system is of a more dynamic nature, though, since this system is only in use as long as the mobile node connects from the outside. In this period the terminal is actually equipped with two mobile node addresses, one from each system. Whereas the mobile node address from the inner system is permanent during operation, the mobile node address from the outer system can be allocated dynamically as needed. The only requirement is that these two addresses must never be the same. If private addresses are used for the outside system reverse tunneling must be used as always.

Any subnet inside the secure domain can be designated as the home network for the inner Mobile IP system. A designated home network for the outer system is more of an open issue. If the outer home agent is deployed in the DMZ 106 of an enterprise, the system will usually run with a virtual home network. It is very uncommon to allow hosts to connect directly to the DMZ. An interesting opportunity arises if the enterprise has already a WLAN on its premises connected to the firewall on a separate segment. Such a configuration is common today since a WLAN is insecure and should not be connected directly inside the secure domain of the enterprise. Rather, the VP1V solution is used to connect over the WLAN from outside. As suggested by the figure 8 the WLAN 109 will in this case be the perfect place for the outer home agent , 102 hatched. The important observation is that any mobile node 103 connecting to this network will effectively be transparent to the outer Mobile IP system since it is the designated outer home. As suggested by figure 8 a mobile node will in this case connect to the inner system over the VPN solution only. Saving the overhead of the embracing outer tunnel 124 contributes to better performance, which is particularly important in this case since it is reasonable to expect that many users will spend a large portion of their working day in this wireless environment.

To summarize this section, consider the following list of the key characteristics of the two mobile IP systems under various conditions
Inner Mobile IP system:
- Is always in use
- Physical home network on internal subnet
- User's application binds to the home address of this system, hence application transparency and seamless operation, both internally and across the security boundary
   Mobile node is inside:
   o The VPN solution is turned off.
   o Operation in the standard way (according to Mobile IP) using the inner home agent
   Mobile node outside
   o The VPN solution is turned on
   o Signalling messages are exchanged with the inner home agent over the VPN tunnel:
   o care-of-address in binding list of the inner home agent is always the address of the Mobile node's address from the secure domain (maintained by the VPN solution).
   o Operation of inner system becomes trivial
Outer Mobile IP system
- Is used as required
- Physical home on externally connected enterprise WLAN
   Mobile node is inside
   o The outer system is not in use
   Mobile node outside
   o Outer system is required
   o Binding list of outer home agent holds the address of the mobile node's current external address
   o The VPN tunnel binds to the home address of the outer system, hence VPN transparency

In the following, a Dual Client implementation will be explained.

The enabling component of the invention is Mobile IP client software that can operate with two independent Mobile IP systems simultaneously, and in such a way that these systems are separated by an ordinary VPN solution. In the following this kind, of client will be referred to as a dual mobility client. This is in contrast to a singular mobility client that is otherwise state-of-art today. When executed in a computer device of a mobile node, the software computer product of the invention establishes the arrangement of the invention. When executed in a computer device of a mobile node, the software computer product of the invention effects the execution of the method of the invention.

Implementation of a dual client on a device running a state-of-art operating system (like members of the Microsoft Windows family) is based on the same implementation principles as previously outlined in figure 5 and figure 6. Two enhancements are then made; first, another virtual mobility adapter is added to host the invariable address of the second Mobile IP systems. Next, a new Mobile IP driver level is included above the VPN driver level. The resulting kernel-space architecture is shown in figure 9, assuming that the VPN client uses its own virtual VPN adapter 114. The new upper Mobile IP driver 116 together with the new virtual mobility adapter, now called the intranet adapter 113 accounts for the inner Mobile IP system. The lower Mobile IP driver 115 together with the original virtual mobility adapter 112 accounts for the outer system. The intermediate VPN driver level 117 isolates the two systems and takes care of all security in the ordinary way. The arrows shown in figure 9 suggest how traffic is shifted on its way through the driver stack. This particular figure corresponds to the case when the mobile node is outside the secure domain and both systems are in use.

The seamless operation results from the fact that the application level above the upper Mobile IP driver 116 relates to the intranet adapter 113 that will always be present and available as a transport end-point.

Figure 10 shows the kernel-space architecture of a dual Mobile IP client when the intermediate VPN solution does not have its own virtual VPN adapter. Again it represents the case when the mobile node is outside the secure domain. The sequence of arrows signifying packet shifting is slightly different due to the missing virtual VPN adapter.

As already pointed out the inner system is always in use whereas the outer system is in use only when the mobile node is outside the secure domain. Moreover, the operation of the inner system is trivial when the mobile node is on the outside since the inner care-of-address is then always the intranet address associated with the VPN connection and will not change. When the mobile node is inside the secure domain the operation of the inner system becomes more complex as it must handle true network handovers and address changes. This complexity is the same as for the outer system when it is in use. Figure 11 shows the resulting kernel-space architecture that applies when the mobile node is on the inside. The components 116, 117, 112 become transparent or idle in this case as explained below.

The key point regarding implementation is that the upper Mobile IP driver 116 can be disabled when the mobile node is on the inside. At the same time the lower Mobile IP driver starts supporting the inner system rather than the outer system. Hence, the implementation of the dual client rests on the fact that there is a context switch in the operating environment of the lower Mobile IP driver 115. A part of this context shift is to let the lower driver start operating on the intranet adapter 113 rather than the mobility adapter 112. As a consequence, true mobility handling with packet shifting to physical adapters is only implemented in the lower Mobility driver. This driver is used for the inner or the outer system, depending on if the mobile node is on the inside or on the outside. In the latter case, the upper Mobile IP driver starts it operation to maintain the inner system until the mobile node returns to the secure domain. For reasons already explained, the complexity of this driver is trivial compared to the lower driver.

The VPN solution 117 is also turned off when the mobile node is on the inside. Any virtual VPN adapter used by the VPN solution will then disappear from the operating environment. Hence, the kernel-space architecture will be the same regardless of the kind of VPN solution being used.

The preceding description is based on the assumption that the dual client is implemented on a "open platform" device having a modular operating system environment comprising both user space and kernel space. Moreover, the concept of a driver and an adapter is central to the discussion. Other devices, and in particular embedded devices, may have operating environments that are very different. If there is no modular architecture the dual client must be implemented as a monolithic system. Depending on the capabilities of the host device such a system can be implemented in either user space or kernel space. In some cases it might even be included as an integral part of the host operating system and the default run-time environment.

The flow-chart in figure 12 represents a more abstract view of the traffic-flow principles that have just been outlined in a specific setting. The general principles must underpin any implementation of a dual client, regardless of the specific characteristics of the particular host device. The flow-chart assumes that neither ordinary reverse tunnelling nor NAT traversal is needed when the Mobile IP client connects directly to the inner system. The role of reverse tunnelling is otherwise discussed in a subsequent section on addressing.

In the following, domain detection will be explained.

The principles outlined in the previous section comprise the traffic flow part of a dual client implementation. The control part (normally implemented in a daemon) must be enhanced accordingly to also include support for a second mobile IP system. Moreover, this capability must be made optional so that it can be activated as required (for reasons already explained). The final piece is to let the daemon initiate the context-switch, depending on if the mobile node is inside or outside the secure domain. This is based on a domain detection mechanism that is carefully designed. Since this decision in the end governs the on/off status of the VPN client, it is paramount that the detection algorithm is reliable and cannot be compromised. At the same time it is important that the decision' can be made quickly to reduce the performance penalty when the mobile node moves between networks, and in particular when it moves across the security domain.

The domain detection mechanism is concerned about the follow two transitions:
- When the mobile node was already connected from outside and a new inside connection is recognized (or suspected).
- When the mobile node was already connected at the inside and a new outside connection is recognized (or suspected).
In either case, the new connection can be over the same adapter as the previous connection or it can be over a different adapter.

In the end, the only reliable evidence that the mobile node is connected to either of the two domains via one of its physical adapters is when a registration with the appropriate home agent succeeds over that adapter. The reliability rests on the security associations between the home agent(s) and the mobile node that is already a part of the Mobile IP system(s). The brute-force approach is to always attempt registrations with both agents whenever domain detection is required. The downside of this approach is poor handover performance, in particular across the security boundary. On one hand this is because registrations may not get through to the appropriate home agent when issued from the opposite side of the security boundary. Handling pending registrations contribute to the complexity of the operation in the daemon and should be avoided whenever possible. On the other side, if a registration succeeds domain detection is complete but the active adapter has also then changed. The latter is really an undesired side-effect if the adapter turns out not to be the optimal. The recent registration will then be overridden immediately resulting in a performance penalty.

The need here is to have a reliable home agent service discovery mechanism that is not linked to a real registration. A spin-off activity of this invention is to try to standardize such a mechanism. It the meantime the performance-degrading effects can be overcome by first making conjectures about location that are based on less reliable but faster domain detection mechanisms with no side-effects. Operation can then proceed more quickly with a fairly high probability that the conjecture in the end turns out to be correct. If the initial conjecture was wrong, the brute-force approach will in the end lead to the correct conclusion. The less reliable domain detection mechanisms that are covered by the invention are as follows:
- Compare observed IP address information with pre-configured address ranges used inside the secure domain
- Utilize information in control messages like ICMP (including agent advertisements) that is a constituent part of the normal traffic flow on the network.
- Perform an unreliable home agent detection by sending a registration with deliberately wrong security association. This will effectively "smoke out" any home agent if it is reachable without actually performing a registration.
- Utilize network context history that is recorded and stored during operation. Such information is collected for foreign agents, default gateways, WLAN access points, etc. using their layer two identifiers (like MAC address) as the basis for indexing.

In the following, addressing details will be explained.

Three different parts of the proposed architecture in figure 7, i.e. the inner Mobile IP system, the intermediate VPN solution and the outer Mobile IP system, result in three levels of addresses and tunnel encapsulations. This can be hard to understand until it is explicitly spelled out. Equipped with an overall description of the method together with the principles for a dual client implementation, this section describes the details regarding addressing.

Figure 13 shows the various components involved together with the address designators that are used for the different components. Note that the mobile node 103 is equipped with four different addresses, corresponding to the two mobile IP systems, 130 gray and 102 hatched, the VPN solution 104 and finally the physical address of the network to which the mobile node is currently connected 107 in this case). The V-address on the mobile node suggests that there is a local VPN adapter in this case. If there is no local VPN adapter the V-address will not exist locally. The T-addresses for the outer home agent and the VPN gateway refers to interfaces that are reachable from the outside.

The use of reverse tunnelling for each of the two systems is closely related to addressing. Reverse tunneling might be required for the inner system depending on the characteristics of the VPN solution. VPN solutions using a virtual VPN adapter may enforce strict filtering policies, either on the client side, or on the gateway side that effectively will prevent any traffic over the VPN connection with a source address that is different from the V-address allocated to the remote connection. Employing reverse tunneling will ensure that the topologically correct source address is used for reverse traffic. This is nothing different from using reverse tunneling to overcome ingress filtering in the outside domain.

For VPN solutions not using a virtual VPN adapter there is a similar rationale for using reverse tunneling but this time only to overcome any actions taken on the client side. The VPN gateway should not expect any particular source address since it has not distributed any to the local device. Many of these gateways will instead perform a NAT operation to convert between a topologically valid address on the inside (the equivalent of a V-address) and the actual address used for the connection on the outside (the T-address will be used). In this case the care-of-address registered in the inner home agent (i.e. the T-address) may become topologically invalid if it is not routable inside the secure domain. To overcome this problem NAT traversal of Mobile IP [10] must be supported by the inner system. A specific form of tunneling is then used for the inner system, both in the forward and the reverse direction. This is nothing different from using the same mechanism in the outer system to overcome NAT devices in the outside domain.

Except from the reasons just explained reverse tunneling should in general not be required for the inner system when connected on the inside. The assumption is that S-addresses are accommodated as valid source addresses on any inside network and that there are no NAT devices on the inside. Mobile nodes on the inside can send traffic directly in the reverse direction. The need for reverse tunneling in the outer system is "as usual". It is required either if private mobile node addresses are used or if ingress filtering is being performed on any local access.

Consider now the sequence of steps taking place in an externally attached mobile node for a packet that is destined for a corresponding node inside the enterprise. This is shown in figure 14 also suggesting what parts taking place at the different levels. For simplicity, it is assumed that the correct registrations have already been completed both for the inner and the outer Mobile IP systems. Assuming that reverse tunnelling is required for the outer system, the packet that eventually leaves the mobile node (over the active adapter) is destined for the outer home agent. The structure of this packet shows clearly the outer Mobile IP reverse tunnel encapsulation, then the VPN tunnel encapsulation, and finally the inner Mobile IP reverse tunnel encapsulation. The reason for the inner reverse tunnel is to ensure a correct topological source address corresponding to the VPN address.

Consider next the sequence of steps that takes place in the outer home agent, the VPN gateway and eventually the inner home agent as the same packet traverses these components on its way to the corresponding node inside the secure domain. This is shown in figure 15.

If a VPN solution without a VPN adapter is used, there are minor changes to the picture. The V-address will then not exist in the mobile node and the T address is temporarily used in its place. Normally, when the packet arrives at the VPN gateway the correct V-address will replace the T-address, effectively performing a NAT operation. For this reason a UDP based reverse tunnelling might need to be inserted. This is discussed in more detailed later.

Packets originating from a corresponding node and destined for an outside mobile node follows the opposite path of what has just been described. The resulting figure is not shown explicitly but follows directly from considering figure 14 and figure 15 in revers and at the same time swap the addresses in all source/destination pairs. The reverse tunnel encapsulations from figure 14 and 15 will then be replaced by corresponding forward tunnel encapsulation from the home agents, of course.

A similar exercise for the packet flow between a corresponding node and mobile node inside the secure domain is trivial since it reduces to ordinary Mobile IP operation in a single system with no VPN solution involved.

The description of the invention has up to this point been casted in a specific setting; i.e.. an enterprise deploying its own Mobile IP service in an IPv4 environment using an existing IPSec VPN gateway. The proposed method emerged as a novel solution to this problem but has in itself a much wider scope of applicability. First, the involved technologies and components can be replaced by other technologies and components as long as the replacements share a few common characteristics with the components and technologies in the original description. Secondly, the method can be applied in many other deployment scenarios to solve other problems than the original one. This section focuses on the first aspect. The next section is devoted to describing other deployment scenarios of interest.

In the end, the proposed method depends only on a few fundamental and general characteristics:
- That both mobility systems run over an IP transport infrastructure.
- That both mobility systems are based on a client-server model in which the server component (aka: agent) is the authoritative source for mobility handling.
- That the remote access security solution (if any) runs over an IP transport infrastructure.
- That the remote access solution is based on a client-server model in which the server component enforces the security policy at the domain boundary.
- That the remote access solution provides a secure IP transport facility between the client and the server.
- That the server component of the security solution is able to distinguish between individual remote connections. Further, that a unique address is associated with each such connection and that this address is routable from the inside domain.
- That the terminal device of interest has capabilities (hardware and software) facilitating implementation of a system with dual client capabilities.

These principles are already embedded in the base Mobile IP standards for both IPv4 and IPv6, hence it follows that the invention applies also when the base standards are accompanied by additional standards extending the base protocols. Note in particular that binding updates (that is a default part of Mobile IPv6 to support routing optimisation) is naturally accommodated by the proposed method. The same applies for any (future) enhancements and improvements to the family of Mobile IP standards. As a particularly important example the upcoming standard on NAT traversal using UDP encapsulation [10] is supported. In fact, NAT traversal can be supported in each of the two systems individually. Likewise, the important upcoming Authentication Authorisation and Accounting (AAA) protocol extensions [12] of Mobile IP are supported in both systems.

The principles from the above list are also already embedded in the base IPSec standards, again including both IPv4 and IPv6. Consequently, the proposed method works with all options, extensions and additions included in both IPSec protocol standard families. Note in particular that the method works with IPSec both in tunnel mode and transport mode if each of those modes is otherwise applicable in the particular context.

The following (non-exhaustive) list gives some additional examples of what is covered by the proposed method.
- Other tunnelling mechanisms than those that are currently embodied in the Mobile IP standards. In particular, there is a gain for tunnelling header compression to reduce the overhead imposed by the three layer of encapsulations.
- Other IP mobility protocols than Mobile IP, if they comply with the principles from the above list.
- Other IP security protocols than IPSec, if they comply with the principles from the above list. In particular, the L2TP[8] and PPTP[9] protocols are both supported.
- The trivial "null" case with no security solution at all.
- Mixed systems using IPv4 and IPv6 in different parts (e.g. IPv6 inside and IPv4 outside). The only assumption is that any of the known IPv4-IPv6 transition methods otherwise apply in the particular context. Moreover, the mobile node must be equipped with a dual-stack solution in this case.
- Other kind of client devices than laptops, PDAs and similar personal terminal devices. In particular, the method can be applied when the client side is implemented as a part of a mobile router that is capable of moving a complete network (with multiple users) rather than just a single user.

In the following, deployments of the method of the invention will be explained.

The first application of the proposed method is to solve the known problem of seamless IP mobility across an enterprise security boundary in a new and more beneficial way. Even if the method emerged as a novel solution to this problem it has in itself a much wider scope of appiicability. In this section two other deployment examples are briefly described. These are both solutions to problems, that have not yet been addressed or solved by the industry. These problems are both conjectured to become important in the future.

Up to this point it has implicitly been assumed that both IP mobility systems are run and administrated by the same entity (the enterprise). The independence between the systems opens for a very interesting opportunity though, namely that the systems are operated by different administrative entities. An enterprise will itself always be responsible for the inner system since this system is part of the secure domain. The outer system is different and the enterprise can equally well exploit a mobility service from a public network operator. The public operator can on his side offer the same service to many enterprises. The business opportunity for the operator is to deploy home agents along the edges of the public network, close to where enterprises have their security gateways. An illustration of this idea is shown in figure 16. The operator can also offer dynamic allocation of outer home agent if his service is linked to an AAA infrastructure. The enterprise user will then always use the most optimal agent in the area where his security gateway is located. This is a particularly important feature for a user from an advanced enterprise since he may then use different security gateways depending on his actual outside location. Distributed and redundant security gateway architecture is state-of-art today among large enterprises spanning multiple sites and countries. In sum, independent operation and administration of the two mobility systems facilitate new future business models among and across public operators and private enterprises. The only requirement is to include handling of two separate administrative interfaces in the dual mobility client.

Another interesting application of the proposed method is to build mobility solutions across networks with different version of the IP protocol. Today, Mobile IPv4 is the most mature technology. Mobile IPv6 is still being standardized but is conjecture to become increasingly important as the transition from IPv4 to IPv6 networks otherwise takes place. The situation on the Internet in the first phase of this transition period will be a number of IPv6 network islands immersed in a large sea if IPv4 networks. Building a mobility service across these network boundaries lends itself naturally to a dual client solution. The only assumption is that the terminal device comprising the mobile node has dual-stack architecture. I.e. a device including both a IPv4 and a IPv6 protocol environment and supporting both protocols at the same time. The current commercial implementations are usually dual stack implementations. The result is a transition method where the end-systems can reap the benefits of both Mobile IP v6 and Mobile Ipv4 in a mixed environment. The transition boundaries can also be security boundaries, of course, as long as the security gateway is also dual-stacked. For an enterprise two operational modes can be envisaged. The first operational mode where the inner IP mobility system is using Mobile IPv4, is applicable for enterprises and other organizations that would like to maintain their IPv4 based system while reaping the benefits of an Mobile IPv6 solution on the outside. The second operational where the inner IP mobility system is Mobile IPv6, is applicable for enterprises or organizations that have migrated to IPv6 but where the core network beyond the secured domain is still using the IPv4.

Next follows a summary of benefits and characteristics of the invention.

This final section lists the key characteristics of the proposed method. Focus is on the contribution of the invention compared to what is otherwise state-of-art today. The list covers benefits of the method itself as well as how application of the method can be used to solve different problems in different circumstances.
- A best-of-breed approach supporting any of the well-know architectures represented by figure 1,2,4.
- Based on using two simultaneous but truly independent mobility systems isolated by an ordinary security solution
- The ordinary security solution is in control of all remote access to the secure domain, in particular the inner mobility system runs via the remote access solution if the mobile node connects from outside
- The two systems fulfil different roles; inner system is responsible for user application transparency. The outer system is responsible for transparency of the security solution itself.
- The design is open demonstrating independency between mobility and security
- The combined system offers total seamless operation on both sides as well as across the security boundary.
- Only the client side is affected. A dual mobility client is the enabling component.
- The complexity of the dual client software is not much higher than a singular client. First, the second mobility system is not always in use. Second, when it is in use the operation is almost trivial
- The client-centric approach (as opposed to a network-centric) facilitates easy, faster and cost-effective deployment.
- No specific network design requirements beyond the extra mobility system. Works with existing network designs and require no changes to existing infrastructure components.
- Facilitates multi-vendor deployment with independent choice of mobility system and security solutions. In particular, previous investments can be leveraged.
- The combined architecture is flexible and scales well since each of the three constituent components can be deployed individually and scale independently as needed.
- Requires no changes (adaptations nor extensions) to any mobility or security technology beyond existing or upcoming standards.
- Based only on a few fundamental principles that are already embedded in all pertinent IPv4 and IPv6 standards. Hence, method will work with all options, extensions and enhancements of these protocols.
- Method works also with other mobility and security protocols as long as they share the same set of basic characteristics.
- The inner and outer mobility systems can be operated by different entities; hence they do not need to be part of the same administrative domain.
- The method solves the known problem of seamless Mobile IP across an enterprise security boundary in a new and better way
- The method can be used to solve similar problems in a much wider scope. This includes new business models for IP mobility across public operators and private enterprises.

### References:

[1] Problem Statement for Mobile IPv4 Traversal Across VPN Gateways
   http://www.ietf.org/internet-drafts/draft-ietf-mobileip-vpn-problem-statement-00.txt
[2] Mobile IPv4 Traversal Across IPsec-based VPN Gateways
   http://www.ietf.org/internet-drafts/draft-adrangi-mobileip-vpn-traversal-02
[3] Birdstep Technology ASA
   http://www.birdstep.com/
[4] ipUnplugged AB
   http://www.ipunplugged.sw/
[5] Ecutel Inc
   http:l/www.ecutel.com/
[6] IP Mobility Support for IPv4. revised (RFC 3220)
   http://www.ietf.org/rfc/rfc3220.txt
[7] IPSec standards
   http://www.ietf.org/rfc/rfc2411.txt?number=2411
[8] Secure Remote Access with L2TP
   http://www.ietf.org/rfc/rfc2888.txt?number=2888
[9] Point-to-Point Tunneling Protocol
   http://www.ietf.org/rfc/rfc2637.txt?number=2637
[10] Mobile IP NAT/NAPT Traversal using UDP Tunnelling
   http://www.ietf.org/internet-drafts/draft-ietf-mobileip-nat-traversal-04.txt
[11] Amdahls law
   http://www.cis.temple.edu/~shi/docs/amdahl/amdahl.html
[12] AAA Registration Keys for Mobile IP
   http://www.ietf.org/internet-drafts/draft-ietf-mobileip-aaa-key-09.txt
[13] Mobile IPv6

## Claims

1. An arrangement for use in a mobil data communications terminal (103), for providing mobile Ip communication via a dual tunnel (124"thin", 124"thick") IP packet data connection between a first application (121) residing in the mobil data communications terminal and a second application (101) residing in a second terminal, said second terminal being in communication with an inner network (105), said inner network being connected with an outer network (107) directly or via a firewall (104), wherein an outer mobile home agent (102) is arranged in the outer network or in a DMZ (106) associated with the firewall and an inner mobile IP home agent (130) is arranged in the inner network,
said arrangement comprising a first mobile IP client part (116) being configurable for association with the inner mobile IP home agent (130),
**characterized in**
**that** said first mobile IP client part has been arranged to convey data between the first application and a second mobile IP client part and to an inner tunnel part (124"thin") directed to the inner home agent,
which said second mobile IP client part (115) is configurable for association with the outer mobile Ip home agent (102), and said second mobile IP client part has been arranged to convey data between the first mobile IP client part and the outer network and to an outer tunnel part (124"thick") directed to the outer home agent.

2. Arrangement according to claim 1, wherein said second mobile IP client part further is configurable to also convey data between the first application and the outer network, and said arrangement further comprising a connection providing device,
which connection providing device is arranged to provide, if the terminal obtains access via the outer network, a first connection between the first application and the first mobile IP client part, a second connection between the first mobile IP client part and the second mobile IP client part, and a third connection between the second mobile IP client part and the outer mobile IP home agent, and,
which connection providing device is arranged to provide, if the terminal obtains access via the inner network, a fourth connection between the first application and the second mobile IP client part, and a fifth connection between the second mobile IP client part and the inner mobile IP home agent.

3. Arrangement according to claim 1 or 2, wherein said first mobile IP client part (116) is controllable for activation or deactivation, and said arrangement further comprising a mobile IP detection device:
a. said mobile IP detection device adapted to activate the first mobile IP client part on detection of a connection to the inner network (105) and a successful mobile IP registration with the inner home agent (130), and
b. said mobile IP detection device adapted to activate the second mobile IP client part on detection of a connection to the outer network (107) and a successful mobile IP registration with the outer home agent (130).

4. Arrangement according to claim 1 or 2, wherein said first mobile IP client part (116) is controllable for activation and deactivation, and that the arrangement further comprises a mobile IP detection device arranged to activate the first mobile IP client part on detection of connection to the outer network (107) by means of at least one of a detection device selected from a group comprising:
a. a first monitoring device arranged to determine the source IP address of an incoming packet and to determine that the address is outside an address range configured for the inner network (105),
b. a second monitoring device arranged to analyze ICMP control messages and arranged to determine that an address associated with the ICMP control message is outside an address range configured for the inner network (105),
c. a third monitoring device arranged to detect an outer home agent (102) on transmission of a registration message with improper security association, and
d. a fourth monitoring device arranged to compare results from said first and second monitoring devices with collected history regarding MAC and IP addresses to Mobile IP Foreign Agents, Default gateways, and WLAN access points that indicate that the mobil terminal is operating in the outer network, and
e. wherein at least one of said detection devices (a,b,c,d) is arranged to indicate that the mobil terminal (103) is connected to the outer network.

5. Arrangement according to claim 1 or 2, wherein
said first mobile IP client part (116) is controllable for deactivation, and
said arrangement further comprising a mobile IP detection device arranged for deactivating the first mobile IP client part on detection of a connection to the outer network (107) by means of at least one of a detection device selected from:
a. a first monitoring device arranged to determine the source IP address of an incoming packet and arranged for detecting that the address is inside an address range figured for the inner network (105),
b. a second monitoring device arranged to analyze ICMP control messages and arranged to detect that an address associated with the ICMP control message is inside an address range configured for the inner network (105),
c. a third monitoring device arranged to detect an inner home agent (130) on transmission of a registration message with incorrect security association, and
d. a fourth monitoring device arranged to detect inconsistances in results from the first, the second and the third monitoring devices and collected history regarding MAC and IP addresses to Mobile IP Foreign Agents, Default Gateways, and WLAN access points that indicate that the mobil terminal is operating in the inner network (105), and
wherein at least one of said detection devices (a,b,c,d) is arranged to indicate that the mobil terminal (103) is connected to the inner network.

6. Arrangement according to any one of the previous claims, wherein said arrangement further comprises,
a third security client part being interposed between the first and second mobile IP client parts, and being configurable for establishing a secure connection with the inner network via a security arrangement arranged between said inner and outer networks.

7. A mobile IP terminal, comprising an arrangement according to any one of the previous claims.

8. A computer readable data carrier storing a set of computer program code, which, when being executed in a mobile IP communication terminal, cause the mobile IP data communication terminal to perform the following method steps:
establishing in a communication system a mobile IP communication via a dual tunnel (124"thin", 124"thick") IP packet data connection between a first application (121) residing in the mobil data communications terminal and a second application (101) residing in a second terminal, said second terminal being in communication with an inner network (105), said inner network being connected with an outer network (107) directly or via a firewall (104), wherein an outer mobile IP home agent (102) has been arranged in the outer network or in a DMZ (106) associated with the firewall, an inner mobile IP home agent (130) has been arranged in the inner network, said inner mobile IP home agent has bee dapted for being associated with a first mobile IP client part (116), said outer mobile IP home agent has been dapted for being associated with a second mobile IP client part (115) and has been arranged to convey data between the first mobile IP client part and the outer network and to an outer tunnel part (124"thick") directed to the outer home agent,
said step of establishing including:
a. configuring a first mobile IP client part (116) for association with the inner mobile IP home agent (130), and
**characterized in**
b. arranging said first mobile IP client part to convey data between the first application and a second mobile IP client part and to an inner tunnel part (124"thin") directed to the inner home agent.

9. A computer readable data carrier according to claim 8, the method steps of which further including:
configuring said second mobile IP client part further to also convey data between the first application and the outer network,
using a connection providing device arranged in the network for providing, if the terminal is to obtain system access via the outer network, a first connection between the first application and the first mobile IP client part, a second connection between the first
mobile IP client part and the second mobile IP client part, and a third connection between the second mobile IP client part and the outer mobile IP home agent, and
using said connection providing device arranged in the network for providing, if the terminal is to obtain system access via the inner network, a fourth connection between the first application and the second mobile IP client part, and a fifth connection between the second mobtMP client part and the inner mobile IP home agent.

10. A communication system arranged for providing to a mobil data communications terminal (103) a mobile IP packet data communication via a dual tunnel (124"thin", 124"thick") IP packet data connection between a first application (121), said first application being operable in said mobil data communications terminal (103), and a second application (101), said second application being operable in a second terminal in an inner network (105),
said system comprising said inner network protected by a firewall (104), and said system including the inner network, an outer network (107) and an outer home agent (102) arranged in the outer network or in a DMZ (106) associated with the firewall, said firewall being arranged between the inner and outer networks,
**characterized in**
an inner home agent (130) arranged in the inner network, said inner home agent being configurable for association with a first mobile IP client part (116) residing in the mobil data communications terminal, and said outer home agent being configurable for association with a second mobile IP client part (115) being operable in the mobil data communications terminal, wherein:
said first mobile IP client part has been arranged to convey data between said first application and said other mobile IP client part and to an inner tunnel part (124"thin") directed to the inner home agent, and
said second mobile IP client part has been arranged to convey data between said first mobile IP client part and said outer network and to an outer tunnel part (124 "thick") directed to said outer home agent.

## Patentansprüche

1. Anordnung zur Verwendung in einem mobilen Datenübertragungsendgerät (103), zur Bereitstellung einer mobilen IP-Verbindung über eine IP-Paket-Datenverbindung durch einen Doppeltunnel (124"thin", 124"thick") zwischen einer ersten, im mobilen Datenübertragungsendgerät laufenden Anwendung (121) und einer zweiten, in einem zweiten Endgerät laufenden Anwendung (101), wobei das zweite Endgerät mit einem inneren Netzwerk (105) in Verbindung steht und das innere Netzwerk direkt oder über einen Firewall (104) mit einem äusseren Netzwerk (107) verbunden ist, wobei im äusseren Netzwerk oder in einer dem Firewall zugeordneten DMZ (106) ein äusserer Mobile IP Home Agent (102) und im inneren Netzwerk ein innerer Mobile IP Home Agent (130) vorhanden ist
und die Anordnung einen ersten Mobile IP-Clientteil (116) beinhaltet, der für die Verbindung mit dem inneren Mobile IP Home Agent (130) konfigurierbar ist,
**dadurch gekennzeichnet,**
**dass** der erste Mobile IP-Clientteil dazu vorgesehen ist, Daten zwischen der ersten Anwendung und einem zweiten Mobile IP-Clientteil und an einen inneren, zum inneren Home Agent gerichteten Tunnelteil (124"thin") zu übermitteln,
welcher zweite Mobile IP-Clientteil (115) für die Verbindung mit dem äusseren Mobile IP Home Agent (102) konfigurierbar ist, und dass der zweite Mobile IP-Clientteil dazu vorgesehen ist, Daten zwischen dem ersten Mobile IP-Clientteil und dem äusseren Netzwerk und an einen äusseren, zum äusseren Home Agent gerichteten Tunnelteil (124"thick") zu übermitteln.

2. Anordnung nach Anspruch 1, worin der zweite Mobile IP-Clientteil weiter auch zur Übermittlung von Daten zwischen der ersten Anwendung und dem äusseren Netzwerk konfigurierbar ist und die Anordnung ausserdem eine Vorrichtung zur Verbindungsbereitstellung beinhaltet,
welche Vorrichtung zur Verbindungsbereitstellung dazu vorgesehen ist, wenn das Endgerät über das äussere Netzwerk Zugang erhält, eine erste Verbindung zwischen der ersten Anwendung und dem ersten Mobile IP-Clientteil, eine zweite Verbindung zwischen dem ersten Mobile IP-Clientteil und dem zweiten Mobile IP-Clientteil und eine dritte Verbindung zwischen dem zweiten Mobile IP-Clientteil und dem äusseren Mobile IP Home Agent herzustellen, und
welche Vorrichtung zur Verbindungsbereitstellung dazu vorgesehen ist, wenn das Endgerät über das innere Netzwerk Zugang erhält, eine vierte Verbindung zwischen der ersten Anwendung und dem zweiten Mobile IP-Clientteil und eine fünfte Verbindung zwischen dem zweiten Mobile IP-Clientteil und dem inneren Mobile IP Home Agent herzustellen.

3. Anordnung nach Anspruch 1 oder 2, worin der erste Mobile IP-Clientteil (116) gesteuert aktivierbar und deaktivierbar ist und die Anordnung ausserdem eine Mobile IP-Erkennungsvorrichtung beinhaltet:
a. welche Mobile IP-Erkennungsvorrichtung dazu vorgesehen ist, den ersten Mobile IP-Clientteil bei der Erkennung einer Verbindung zum inneren Netzwerk (105) und einer erfolgreichen Mobile IP-Registrierung beim inneren Home Agent (130) zu aktivieren, und
b. welche Mobile IP-Erkennungsvorrichtung dazu vorgesehen ist, den zweiten Mobile IP-Clientteil bei der Erkennung einer Verbindung zum äusseren Netzwerk (107) und einer erfolgreichen Mobile IP-Registrierung beim äusseren Home Agent (130) zu aktivieren.

4. Anordnung nach Anspruch 1 oder 2, worin der erste Mobile IP-Clientteil (116) gesteuert aktivierbar und deaktivierbar ist und die Anordnung ausserdem eine Mobile IP-Erkennungsvorrichtung beinhaltet, welche dazu vorgesehen ist, den ersten Mobile IP-Clientteil zu aktivieren bei der Erkennung einer Verbindung zum äusseren Netzwerk (107) durch mindestens eine Erkennungsvorrichtung, welche ausgewählt ist aus einer Gruppe umfassend:
a. eine erste Überwachungsvorrichtung, die dazu vorgesehen ist, die IP-Quelladresse eines eingehenden Pakets zu ermitteln und zu bestimmen, dass die Adresse ausserhalb eines für das innere Netzwerk (105) konfigurierten Adressbereichs liegt,
b. eine zweite Überwachungsvorrichtung, die dazu vorgesehen ist, ICMP-Kontrollnachrichten zu analysieren und zu bestimmen, dass eine der ICMP-Kontrollnachricht zugeordnete Adresse ausserhalb eines für das innere Netzwerk (105) konfigurierten Adressbereichs liegt,
c. eine dritte Überwachungsvorrichtung, welche dazu vorgesehen ist, bei der Übertragung einer Registrierungsnachricht mit falscher Sicherheitszuordnung einen äusseren Home Agent (102) zu erkennen, und
d. eine vierte Überwachungsvorrichtung, welche dazu vorgesehen ist, Resultate der ersten und zweiten Überwachungsvorrichtung mit dem gesammelten Verlauf bezüglich der MAC- und IP-Adressen von Mobile IP Foreign Agents, Default Gateways und WLAN-Zugangspunkten zu vergleichen, welche anzeigen, dass das mobile Endgerät im äusseren Netzwerk arbeitet, und
e. wobei mindestens eine der genannten Erkennungsvorrichtungen (a,b,c,d) dazu vorgesehen ist anzuzeigen, dass das mobile Endgerät (103) mit dem äusseren Netzwerk verbunden ist.

5. Anordnung nach Anspruch 1 oder 2, worin
der erste Mobile IP-Clientteil (116) gesteuert deaktivierbar ist,
wobei die Anordnung ausserdem eine Mobile IP-Erkennungsvorrichtung beinhaltet, welche dazu vorgesehen ist, den ersten Mobile IP-Clientteil zu deaktivieren bei der Erkennung einer Verbindung zum äusseren Netzwerk (107) durch mindestens eine Erkennungsvorrichtung, welche ausgewählt ist aus:
a. einer ersten Überwachungsvorrichtung, die dazu vorgesehen ist, die IP-Quelladresse eines eingehenden Pakets zu ermitteln und dazu vorgesehen ist zu bestimmen, dass die Adresse innerhalb eines für das innere Netzwerk (105) konfigurierten Adressbereichs liegt,
b. einer zweiten Überwachungsvorrichtung, die dazu vorgesehen ist, ICMP-Kontrollnachrichten zu analysieren und erkennen, dass eine der ICMP-Kontrollnachricht zugeordnete Adresse innerhalb eines für das innere Netzwerk (105) konfigurierten Adressbereichs liegt,
c. einer dritten Überwachungsvorrichtung, welche dazu vorgesehen ist, bei der Übertragung einer Registrierungsnachricht mit falscher Sicherheitszuordnung einen inneren Home Agent (130) zu erkennen, und
d. einer vierten Überwachungsvorrichtung, welche dazu vorgesehen ist, Übereinstimmungsfehler zwischen den Resultaten der ersten, der zweiten und der dritten Überwachungsvorrichtung und dem gesammelten Verlauf bezüglich der MAC- und IP-Adressen von Mobile IP Foreign Agents, Default Gateways und WLAN-Zugangspunkten zu erkennen, welche anzeigen, dass das mobile Endgerät im inneren Netzwerk (105) arbeitet, und
wobei mindestens eine der genannten
Erkennungsvorrichtungen (a,b,c,d) dazu vorgesehen ist anzuzeigen, dass das mobile Endgerät (103) mit dem inneren Netzwerk verbunden ist.

6. Anordnung nach einem der vorstehenden Ansprüche, weiter beinhaltend
einen dritten Sicherheits-Clientteil, der zwischen dem ersten und dem zweiten Mobile IP-Clientteil angeordnet ist und zur Herstellung einer sicheren Verbindung mit dem inneren Netzwerk über eine zwischen dem inneren und dem äusseren Netzwerk angeordnete Sicherheitsanordnung konfigurierbar ist.

7. Mobiles IP-Endgerät mit einer Anordnung nach einem der vorstehenden Ansprüche.

8. Computerlesbarer Datenträger, auf welchem eine Reihe Computerprogrammcode gespeichert ist, dessen Ausführung in einem mobilen IP-Datenübertragungsendgerät die Durchführung folgender Verfahrensschritte durch das mobile IP-Datenübertragungsendgerät bewirkt:
Herstellung einer mobilen IP-Verbindung in einem Datenübertragungssystem über eine IP-Paket-Datenverbindung durch einen Doppeltunnel (124"thin", 124"thick") zwischen einer ersten, im mobilen Datenübertragungsendgerät laufenden Anwendung (121) und einer zweiten, in einem zweiten Endgerät laufenden Anwendung (101), wobei das zweite Endgerät mit einem inneren Netzwerk (105) in Verbindung steht und das innere Netzwerk direkt oder über:einen Firewall (104) mit einem äusseren Netzwerk (107) verbunden ist, wobei im äusseren Netzwerk oder in einer dem Firewall zugeordneten DMZ (106) ein äusserer Mobile IP Home Agent (102) und im inneren Netzwerk ein innerer Mobile IP Home Agent (130) vorhanden ist, der innere Mobile IP Home Agent mit einem ersten Mobile IP-Clientteil (116) verbindbar ist und der äussere Mobile IP Home Agent mit einem zweiten Mobile IP-Clientteil (115) verbindbar ist und dazu vorgesehen ist, Daten zwischen dem ersten Mobile IP-Clientteil und dem äusseren Netzwerk und an einen äusseren, zum äusseren Home Agent gerichteten Tunnelteil (124"thick") zu übermitteln, wobei besagter Schritt der Herstellung beinhaltet:
a. das Konfigurieren eines ersten Mobile IP-Clientteils (116) zur Verbindung mit dem inneren Mobile IP Home Agent (130), und **dadurch gekennzeichnet, dass**
b. der erste Mobile IP-Clientteil dazu vorgesehen ist, Daten zwischen der ersten Anwendung und einem zweiten Mobile IP-Clientteil und an einen inneren, zum inneren Home Agent gerichteten Tunnelteil (124"thin") zu übermitteln.

9. Computerlesbarer Datenträger nach Anspruch 8, wobei dessen Verfahrensschritte weiter beinhalten:
das Konfigurieren des zweiten Mobile IP-Clientteils zur Übermittlung von Daten auch zwischen der ersten Anwendung und dem äusseren Netzwerk,
die Verwendung einer im Netzwerk angeordneten Vorrichtung zur Verbindungsbereitstellung zur Bereitstellung einer ersten Verbindung zwischen der ersten Anwendung und dem ersten Mobile IP-Clientteil, wenn das Endgerät über das äussere Netzwerk auf das System zugreifen soll, einer zweiten Verbindung zwischen dem ersten Mobile IP-Clientteil und dem zweiten Mobile IP-Clientteil und einer dritten Verbindung zwischen dem zweiten Mobile IP-Clientteil und dem äusseren Mobile IP Home Agent, und
die Verwendung der im Netzwerk angeordneten Vorrichtung zur Verbindungsbereitstellung zur Bereitstellung einer vierten Verbindung zwischen der ersten Anwendung und dem zweiten Mobile IP-Clientteil, wenn das Endgerät über das innere Netzwerk auf das System zugreifen soll, und einer fünften Verbindung zwischen dem zweiten Mobile IP-Clientteil und dem inneren Mobile IP Home Agent.

10. Übertragungssystem zur Bereitstellung einer mobilen IP-Paket-Datenverbindung für ein mobiles Datenübertragungsendgerät (103) über eine IP-Paket-Datenverbindung durch einen Doppeltunnel (124"thin", 124"thick") zwischen einer ersten Anwendung (121), wobei die erste Anwendung im mobilen Datenübertragungsendgerät (103) betriebsfähig ist, und einer zweiten Anwendung (101), wobei die zweite Anwendung in einem zweiten Endgerät in einem inneren Netzwerk (105) betriebsfähig ist,
wobei das System das durch einen Firewall (104) geschützte innere Netzwerk beinhaltet und das System das innere Netzwerk, ein äusseres Netzwerk (107) und einen im äusseren Netzwerk oder in einer dem Firewall zugeordneten DMZ (106) angeordneten äusseren Home Agent (102) beinhaltet und der Firewall zwischen dem inneren und dem äusseren Netzwerk angeordnet ist,
**dadurch gekennzeichnet, dass**
im inneren Netzwerk ein innerer Home Agent (130) angeordnet ist, wobei der innere Home Agent mit einem im mobilen Datenübertragungsendgerät laufenden ersten Mobile IP-Clientteil (116) verbindbar ist und der äussere Home Agent mit einem im mobilen Datenübertragungsendgerät laufenden zweiten Mobile IP-Clientteil (115) verbindbar ist, wobei:
der erste Mobile IP-Clientteil dazu vorgesehen ist, Daten zwischen der ersten Anwendung und dem anderen Mobile IP-Clientteil und an einen inneren, zum inneren Home Agent gerichteten Tunnelteil (124"thin") zu übermitteln, und
der zweite Mobile IP-Clientteil dazu vorgesehen ist, Daten zwischen dem ersten Mobile IP-Clientteil und dem äusseren Netzwerk und an einen äusseren, zum äusseren Home Agent gerichteten Tunnelteil (124"thick") zu übermitteln.

## Revendications

1. Agencement pour utilisation dans un terminal de communication de données mobile (103), pour fournir une communication IP mobile par l'intermédiaire d'une connexion de données par paquets IP à travers un tunnel double (124"thin", 124"thick") entre une première application (121) résidant dans le terminal de communication de données mobile et une deuxième application (101) résidant dans un deuxième terminal, ledit deuxième terminal étant en communication avec un réseau intérieur (105), ledit réseau intérieur étant connecté à un réseau extérieur (107) directement ou par l'intermédiaire d'un coupe-feu (104), où un agent mère IP mobile extérieur (102) est agencé dans le réseau extérieur ou dans une DMZ (106) associée au coupe-feu et un agent mère IP mobile intérieur (130) est agencé dans le réseau intérieur,
ledit agencement comprenant une première partie client IP mobile (116) laquelle est configurable pour association avec l'agent mère IP mobile intérieur (130),
**caractérisé en ce**
**que** ladite première partie client IP mobile a été agencée de sorte à acheminer des données entre la première application et une deuxième partie client IP mobile et à une partie tunnel intérieure (124"thin") conduisant à l'agent mère intérieur,
laquelle deuxième partie client IP mobile (115) est configurable pour association avec l'agent mère IP mobile extérieur (102), et que ladite deuxième partie client IP mobile a été agencée de sorte à acheminer des données entre la première partie client IP mobile et le réseau extérieur et à une partie tunnel extérieure (124"thick") conduisant à l'agent mère extérieur.

2. Agencement selon la revendication 1, où ladite deuxième partie client IP mobile est en outre configurable pour acheminer également des données entre la première application et le réseau extérieur, et ledit agencement comprenant en outre un dispositif de fourniture de connexion,
lequel dispositif de fourniture de connexion est agencé de sorte à fournir, si le terminal obtient l'accès par l'intermédiaire du réseau extérieur, une première connexion entre la première application et la première partie client IP mobile, une deuxième connexion entre la première partie client IP mobile et la deuxième partie client IP mobile et une troisième connexion entre la deuxième partie client IP mobile et l'agent mère IP mobile extérieur, et
lequel dispositif de fourniture de connexion est agencé de sorte à fournir, si le terminal obtient l'accès par l'intermédiaire du réseau intérieur, une quatrième connexion entre la première application et la deuxième partie client IP mobile et une cinquième connexion entre la deuxième partie client IP mobile et l'agent mère IP mobile intérieur.

3. Agencement selon la revendication 1 ou 2, où ladite première partie client IP mobile (116) est activable ou désactivable sur commande, et ledit agencement comprenant en outre un dispositif de détection IP mobile:
a. ledit dispositif de détection IP mobile adapté à activer la première partie client IP mobile en cas de détection d'une connexion au réseau intérieur (105) et d'un enregistrement IP mobile réussi auprès de l'agent mère intérieur (130), et
b. ledit dispositif de détection IP mobile adapté à activer la deuxième partie client IP mobile en cas de détection d'une connexion au réseau extérieur (107) et d'un enregistrement IP mobile réussi auprès de l'agent mère extérieur (130).

4. Agencement selon la revendication 1 ou 2, où ladite première partie client IP mobile (116) est activable ou désactivable sur commande, et que l'agencement comprend en outre un dispositif de détection IP mobile agencé de sorte à activer la première partie client IP mobile en cas de détection d'une connexion au réseau extérieur (107) au moyen d'au moins un dispositif de détection choisi parmi un groupe comprenant:
a. un premier dispositif de surveillance agencé de sorte à déterminer l'adresse IP source d'un paquet entrant et à déterminer que l'adresse est en dehors d'une plage d'adressage configurée pour le réseau intérieur (105),
b. un deuxième dispositif de surveillance agencé de sorte à analyser des messages de contrôle ICMP et agencé de sorte à déterminer qu'une adresse associée au message de contrôle ICMP est en dehors d'une plage d'adressage configurée pour le réseau intérieur (105),
c. un troisième dispositif de surveillance agencé de sorte à détecter un agent mère extérieur (102) lors de la transmission d'un message d'enregistrement ayant une association de sécurité impropre,
d. un quatrième dispositif de surveillance agencé de sorte à comparer des résultats desdits premier et deuxième dispositifs de surveillance à l'historique recueilli à l'égard d'adresses MAC et IP d'agents relais IP mobile, passerelles par défaut et points d'accès WLAN qui indiquent que le terminal mobile est en train d'opérer dans le réseau extérieur, et
e. où au moins un desdits dispositifs de détection (a,b,c,d) est agencé de sorte à indiquer que le terminal mobile (103) est connecté au réseau extérieur.

5. Agencement selon la revendication 1 ou 2, où
ladite première partie client IP mobile (116) est désactivable sur commande,
ledit agencement comprenant en outre un dispositif de détection IP mobile agencé de sorte à désactiver la première partie client IP mobile en cas de détection d'une connexion au réseau extérieur (107) au moyen d'au moins un dispositif de détection choisi parmi:
a. un premier dispositif de surveillance agencé de sorte à déterminer l'adresse IP source d'un paquet entrant et agencé de sorte à détecter que l'adresse est à l'intérieur d'une plage d'adressage configurée pour le réseau intérieur (105),
b, un deuxième dispositif de surveillance agencé de sorte à analyser des messages de contrôle ICMP et agencé de sorte à détecter qu'une adresse associée au message de contrôle ICMP est à l'intérieur d'une plage d'adressage configurée pour le réseau intérieur (105),
c. un troisième dispositif de surveillance agencé de sorte à détecter un agent mère intérieur (130) lors de la transmission d'un message d'enregistrement ayant une association de sécurité incorrecte, et
d. un quatrième dispositif de surveillance agencé de sorte à détecter des incohérences dans des résultats du premier, du deuxième et du troisième dispositif de surveillance et l'historique recueilli à l'égard d'adresses MAC et IP d'agents relais IP mobile, passerelles par défaut et points d'accès WLAN qui indiquent que le terminal mobile est en train d'opérer dans le réseau intérieur (105), et
où au moins un desdits dispositifs de détection (a,b,c,d) est agencé de sorte à indiquer que le terminal mobile (103) est connecté au réseau intérieur.

6. Agencement selon l'une quelconque des revendications précédentes, où ledit agencement comprend en outre
une troisième partie client de sécurité laquelle est interposée entre la première et la deuxième partie client IP mobile et est configurable pour établir une connexion sécurisée avec le réseau intérieur par l'intermédiaire d'un agencement de sécurité agencé entre lesdits réseaux intérieur et extérieur.

7. Terminal IP mobile comprenant un agencement selon l'une quelconque des revendications précédentes.

8. Support de données lisible par ordinateur, enregistrant un ensemble de code de programme qui, lorsqu'il est exécuté dans un terminal de communication IP mobile, fait effectuer par le terminal de communication de données IP mobile les étapes procédurales suivantes:
établissement, dans un système de communication, d'une communication IP mobile par l'intermédiaire d'une connexion de données par paquets IP à travers un tunnel double (124"thin", 124"thick") entre une première application (121) résidant dans le terminal de communication de données mobile et une deuxième application (101) résidant dans un deuxième terminal, ledit deuxième terminal étant en communication avec un réseau intérieur (105), ledit réseau intérieur étant connecté à un réseau extérieur (107) directement ou par l'intermédiaire d'un coupe-feu (104), où un agent mère IP mobile extérieur (102) a été agencé dans le réseau extérieur ou dans une DMZ (106) associée au coupe-feu, et un agent mère IP mobile intérieur (130) a été agencé dans le réseau intérieur, ledit agentmère IP mobile intérieur a été adapté pour être associé avec une première partie client IP mobile (116), ledit agent mère IP mobile extérieur a été adapté pour être associé avec une deuxième partie client IP mobile (115) et a été agencée de sorte à acheminer des données entre la première partie client IP mobile et le réseau extérieur et à une partie tunnel extérieure (124"thick") conduisant à l'agent mère extérieur,
ladite étape de l'établissement incluant:
a. la configuration d'une première partie client IP mobile (116) pour l'association avec l'agent mère IP mobile intérieur (130),
**caractérisé par**
b. l'agencement de ladite première partie client IP mobile de sorte à acheminer des données entre la première application et une deuxième partie client IP mobile et à une partie tunnel intérieure (124"thin") conduisant à l'agent mère intérieur.

9. Support de données lisible par ordinateur selon la revendication 8, les étapes procédurales duquel incluant en outre :
la configuration de ladite deuxième partie client IP mobile pour acheminer également des données entre la première application et le réseau extérieur,
l'utilisation d'un dispositif de fourniture de connexion agencé dans le réseau afin de fournir, si le terminal doit obtenir l'accès au système par l'intermédiaire du réseau extérieur, une première connexion entre la première application et la première partie client IP mobile, une deuxième connexion entre la première partie client IP mobile et la deuxième partie client IP mobile, et une troisième connexion entre la deuxième partie client IP mobile et l'agent mère IP mobile extérieur, et
l'utilisation dudit dispositif de fourniture de connexion agencé dans le réseau pour fournir, si le terminal doit obtenir l'accès au système par l'intermédiaire du réseau intérieur, une quatrième connexion entre la première application et la deuxième partie client IP mobile, et une cinquième connexion entre la deuxième partie client IP mobile et l'agent mère IP mobile intérieur.

10. Système de communication agencé pour fournir à un terminal de communication de données mobile (103) une communication de données IP mobile par paquets par l'intermédiaire d'une connexion de données par paquets IP à travers un tunnel double (124"thin", 124"thick") entre une première application (121), ladite première application étant opérable dans ledit terminal de communication de données mobile (103), et une deuxième application (101), ladite deuxième application étant opérable dans un deuxième terminal dans un réseau intérieur (105),
ledit système comprenant ledit réseau intérieur protégé par un coupe-feu (104), et ledit système incluant le réseau intérieur, un réseau extérieur (107) et un agent mère extérieur (102) agencé dans le réseau extérieur ou dans une DMZ (106) associée au coupe-feu, ledit coupe-feu étant agencé entre les réseaux intérieur et extérieur,
**caractérisé par**
un agent mère intérieur (130) agencé dans le réseau intérieur, ledit agent mère intérieur étant configurable pour association avec une première partie client IP mobile (116) résidant dans le terminal de communication de données mobile, et ledit agent mère extérieur étant configurable pour association avec une deuxième partie client IP mobile (115) opérable dans le terminal de communication de données mobile, où:
ladite première partie client IP mobile a été agencée de sorte à acheminer des données entre ladite première application et ladite autre partie client IP mobile et à une partie tunnel intérieure (124"thin") conduisant à l'agent mère intérieur, et
ladite deuxième partie client IP mobile a été agencée de sorte à acheminer des données entre ladite première partie client IP mobile et ledit réseau extérieur et à une partie tunnel extérieure (124"thick") conduisant à l'agent mère extérieur.
